# EUROPÄISCHE PATENTSCHRIFT

(11) **EP 3 696 630 B1**
(45) Veröffentlichungstag und Bekanntmachung des Hinweises auf die Patenterteilung: **17.11.2021**
(21) Anmeldenummer: 19157878.0
(22) Anmeldetag: 18.02.2019
(51) Int. Cl.: G05B 19/18, G05B 19/12, G06K 1/12, G06K 7/14

(54) **VERFAHREN ZUM SPANENDEN BEARBEITEN EINES WERKSTÜCKS AN EINER NUMERISCH GESTEUERTEN WERKZEUGMASCHINE MIT EINEM WERKZEUG**
METHOD FOR MACHINING A WORKPIECE ON A NUMERICALLY CONTROLLED MACHINE TOOL WITH A TOOL
PROCÉDÉ D'USINAGE PAR ENLÈVEMENT DE COPEAUX D'UNE PIÈCE SUR UNE MACHINE-OUTIL À COMMANDE NUMÉRIQUE DOTÉE D'UN OUTIL

(43) Veröffentlichungstag der Anmeldung: 19.08.2020
(73) Patentinhaber: GILDEMEISTER Drehmaschinen GmbH, 33689 Bielefeld (DE); ISTOS GmbH, 33689 Bielefeld (DE)
(72) Erfinder: Knutzen, Simon, 52064 Aachen (DE); Krause, Raphael, 52080 Aachen (DE); Hackelöer, Felix, 50668 Köln (DE); Weissert, Alfred, 33758 Schloß-Holte - Stukenbrock (DE); Halm, Christian, 33739 Bielefeld (DE)
(74) Vertreter: MERH-IP Matias Erny Reichl Hoffmann Patentanwälte PartG mbB

(56) Entgegenhaltungen:
- DE-A1-102012 006 124
- DE-A1-102016 214 697

## Beschreibung

Die vorliegende Erfindung betrifft ein Verfahren zum spanenden Bearbeiten eines Werkstücks an einer numerisch gesteuerten Werkzeugmaschine mit einem Werkzeug zur Einbringung eines Codes. Des Weiteren betrifft die vorliegende Erfindung eine Werkzeugmaschine, an der das erfindungsgemäße Verfahren ausgeführt werden kann sowie ein Verfahren, um ein auf dem Werkstück erzeugten Code auszulesen.

### HINTERGRUND DER ERFINDUNG

Aus der DE 10 2017 001915 A1 ist ein Verfahren und ein System zum kennzeichenlosen Identifizieren mindestens eines Bauteils sowie zum Rückverfolgen von Bauteilen in einem Produktionsprozess bekannt. Insbesondere beschreibt die DE 10 2017 001915 A1 ein Verfahren und ein System zum kennzeichenlosen Identifizieren mindestens eines Bauteils, indem mittels einer Bildverarbeitungsanlage die optische Oberflächenstruktur mindestens eines Teils des Bauteils als Bild erfasst und die einmaligen, charakteristischen, optischen Oberflächenmerkmale des Bauteils ermittelt werden, und als eindeutige Kennzeichnung des letzteren eine digitale Signatur erzeugt und diese als Referenz der Kennzeichnung mindestens des einen Teils des Bauteils in einer elektronischen Datenverarbeitungs-anlage gespeichert wird.

Die DE 10 2012 006 124 A1 offenbart ein Verfahren zur Erzeugung von Strukturen oder Konturen an einem Werkstück sowie eine Kehlmaschine. In einer Kehlmaschine wird mit einem drehbar angetriebenen Werkzeug am Werkstück eine Struktur oder Kontur durch Werkstückabtrag hergestellt. Die Werkstückpositionen längs des Werkstückes zum Erzeugen der Struktur oder Kontur werden in Abhängigkeit von Daten des Werkstückes und des Werkzeuges festgelegt.

Ferner wird darin beschrieben, dass das erfasste Bild des mindestens einen Teils des Bauteils für zu betrachtenden Identifikationsbereiche mindestens teilweise maskiert, eine Anzahl der einmaligen, charakteristischen, optischen Oberflächenmerkmale des Bauteils aus den Bilddaten des mindestens teilweise maskierten Bildes des mindestens einen Teils des Bauteils über entsprechende Merkmalsvektoren extrahiert und bestimmt wird, wobei aus der extrahierten Anzahl der intrinsischen Oberflächenmerkmalen des mindestens teilweise maskierten Bildes des mindestens einen Teils des Bauteils mittels angepasster vorgegebener Software-Algorithmen die die eindeutige Kennzeichnung des mindestens einen Teils des Bauteils bildende Signatur des letzteren erstellt und als Referenz der eindeutigen Kennzeichnung in der Datenverarbeitungsanlage gespeichert wird.

Da das bekannte Verfahren darauf basiert, auf dem Werkstück vorhandene, charakteristische Merkmale zu erfassen und diese für die Identifizierung des jeweiligen

Werkstücks zu verwenden, bleibt es fraglich, ob das Werkstück bei Veränderungen dieser charakteristischen Merkmale (zum Beispiel durch weitere Bearbeitungsschritte oder durch "grobes" Handhaben des Werkstücks) noch identifiziert werden kann oder nicht.

Des Weiteren ergibt sich der Nachteil, dass über das bekannte Verfahren keine Möglichkeit besteht, zielgerichtet und aktiv Informationen auf dem Werkstück abzuspeichern bzw. zu hinterlegen, die gegebenenfalls für den weiteren Bearbeitungsverlauf oder für spätere Zwecke wieder ausgelesen werden können.

### ZUSAMMENFASSUNG DER ERFINDUNG

Eine Aufgabe der vorliegenden Erfindung ist es daher, ein Verfahren zum spanenden Bearbeiten eines Werkstücks an einer numerisch gesteuerten Werkzeugmaschine mit einem Werkzeug zur Einbringung eines Codes bereitzustellen, mit dem die obigen Probleme vermieden werden. Insbesondere ist es Aufgabe der vorliegenden Erfindung, vorbestimmte Informationen aktiv auf dem Werkstück abzuspeichern bzw. einzubringen.

Des Weiteren ist es Aufgabe der vorliegenden Erfindung, eine Werkzeugmaschine bereitzustellen, mit dem das erfindungsgemäße Verfahren ausgeführt werden kann, und ein Verfahren bereitzustellen, mit dem die auf dem Werkstück abgespeicherten Informationen ausgelesen werden können.

Die Aufgabe wird durch ein Verfahren zum spanenden Bearbeiten eines Werkstücks nach Anspruch 1 und eine Werkzeugmaschine nach Anspruch 9. gelöst. Die abhängigen Ansprüche beziehen sich auf vorteilhafte Ausführungsbeispiele des erfindungsgemäßen Verfahrens und der erfindungsgemäßen Werkzeugmaschine.

Das erfindungsgemäße Verfahren zum spanenden Bearbeiten eines Werkstücks an einer numerisch gesteuerten Werkzeugmaschine mit einem Werkzeug, mit folgendem Schritt: Steuern einer Relativbewegung des Werkzeugs zu dem Werkstück auf Grundlage von vorgegebenen Steuerdaten zum spanenden Bearbeiten des Werkstücks, wobei die Steuerdaten die zu steuernde Relativbewegung des Werkzeugs zu dem Werkstück zumindest in einer ersten Bearbeitungsrichtung und eine Vorschubgeschwindigkeit bei der Relativbewegung des Werkzeugs zu dem Werkstück zumindest in der ersten Bearbeitungsrichtung angeben, wobei die Steuerdaten Änderungen der Vorschubgeschwindigkeit bei der Relativbewegung des Werkzeugs zu dem Werkstück zumindest in der ersten Bearbeitungsrichtung angeben, wobei die Änderungen der Vorschubgeschwindigkeit auf Grundlage eines Musters, das vorbestimmte Informationen codiert, vorgegeben sind, und bei der Relativbewegung des Werkzeugs zu dem Werkstück auf Grundlage der Steuerdaten das die vorbestimmten Informationen codierende Muster auf der Oberfläche des Werkstücks optisch auslesbar erzeugt wird.

Durch das erfindungsgemäße Verfahren ist es nun möglich, zielgerichtet Informationen auf dem Werkstück, insbesondere auf der Oberfläche des Werkstücks, zu hinterlegen, die später auslesbar und somit z.B. für den weiteren Bearbeitungsprozess oder für das spätere Handling/ die spätere Montage verwendbar sind. Insbesondere ist dieses Verfahren von Vorteil, da es sowohl an Drehmaschinen als auch an Fräsmaschinen Anwendung finden kann.

Ferner ermöglicht das erfindungsgemäße Verfahren, das Werkstück auch weiterhin an der Oberfläche spanend zu bearbeiten, auf der sich die Informationen befinden, da während der spanenden Bearbeitung die Informationen erneut aufgebracht werden können oder, sollte es zu einem teilweisen Bearbeiten der die Informationen tragenden Oberfläche kommen, vervollständigt werden können, und das auch in einem Arbeitsschritt zusammen mit der spanenden Bearbeitung.

Zudem ermöglicht das erfindungsgemäße Verfahren in vorteilhafter Weise, dass nicht nur einfache Identifikationsinformationen (z.B. eine einfache Identifikationsnummer) auf dem Werkstück hinterlegt/gespeichert werden können, sondern auch deutlich größere Informationen/Daten auf der Oberfläche des Werkstücks eingebracht werden können (z.B. durch das Aufbringen eines 2D-Codes oder dergleichen).

Zudem kann das erfindungsgemäße Verfahren dadurch vorteilhaft weitergebildet werden, dass das die vorbestimmten Informationen codierende Muster auf der Oberfläche des Werkstücks durch eine opto-elektronische Einrichtung auslesbar ist.

Hierdurch können die in Form eines Musters bzw. Codes auf der Oberfläche des Werkstücks aufgebrachten Informationen ausgelesen werden, teilweise mit einfachen CCD-Scannern bis hin zu Digitalkameras oder Kameras von Handys bzw. Smartphones.

Insbesondere können für das Auslesen des Codes verschiedenste Auslesegeräte wie verschiedenste CCD-Scanner, Laser-Scanner (beispielsweise ein 3D-Laser-Scanner bzw. Laser-Profil-Scanner), oder sogenannte Imager (Auslesegeräte auf Basis von Kamerasystemen), wobei Imager teilweise den Code in Farbe aufnehmen/auslesen können oder aber lediglich in Grautönen (Graustufen). Hierfür werden im Wesentlichen CMOS- oder CCD-Systeme verwendet.

Eine vorteilhafte Weiterbildung des erfindungsgemäßen Verfahrens besteht weiterhin darin, dass das die vorbestimmten Informationen codierende Muster auf der Oberfläche des Werkstücks ein ein- oder zweidimensionaler binärer Code ist.

Hierdurch wird ermöglicht, dass, je nach Datenmenge und Bearbeitungsmaschine (z.B. Drehmaschine oder Fräsmaschine), unterschiedliche Informationen zu dem Werkstück oder zu dessen weiterer Verwendung in kompakter Art und Weise auf der Oberfläche des Werkstücks aufgebracht werden kann.

Des Weiteren kann das erfindungsgemäße Verfahren dadurch vorteilhaft weitergebildet werden, dass das die vorbestimmten Informationen codierende Muster auf der Oberfläche des Werkstücks ein Barcode ist.

Ein Barcode bzw. ein Strichcode eignet sich insbesondere dann, wenn eine begrenzte Menge an Informationen oder Daten in einem Code und somit auf dem Werkstück gespeichert werden soll.

Eine besonders vorteilhafte Weiterbildung des erfindungsgemäßen Verfahrens besteht darin, dass das die vorbestimmten Informationen codierende Muster auf der Oberfläche des Werkstücks ein QR-Code ist.

Diese Form der Informationscodierung lässt eine deutlich größere Menge an Informationen und Daten zu, die codiert werden können.

Das erfindungsgemäße Verfahren kann ferner dadurch vorteilhaft weitergebildet werden, dass die Steuerdaten im Wesentlichen folgendes aufweisen: einen ersten Steuerdatentyp, der die Relativbewegung des Werkzeugs zu dem Werkstück zumindest in der ersten Bearbeitungsrichtung und die Vorschubgeschwindigkeit bei der Relativbewegung des Werkzeugs zu dem Werkstück zumindest in der ersten Bearbeitungsrichtung angibt, so dass eine vorgegebene Geometrie des Werkstücks bei der spanenden Bearbeitung erzeugt wird, und einen zweiten Steuerdatentyp, der die durch den ersten Typ von Steuerdaten angegebene Vorschubgeschwindigkeit der Relativbewegung des Werkzeugs zu dem Werkstück zumindest in der ersten Bearbeitungsrichtung auf Grundlage des Musters, das die vorbestimmten Informationen codiert, ändert oder ersetzt, so dass bei der Relativbewegung des Werkzeugs zu dem Werkstück das Muster auf der Oberfläche des Werkstücks optisch auslesbar erzeugt wird.

Dabei kann das erfindungsgemäße Verfahren weiterhin auch noch dadurch vorteilhaft weitergebildet werden, dass der erste Steuerdatentyp ferner die Relativbewegung des Werkzeugs zu dem Werkstück zumindest in einer zweiten Bearbeitungsrichtung und die Vorschubgeschwindigkeit bei der Relativbewegung des Werkzeugs zu dem Werkstück zumindest in der zweiten Bearbeitungsrichtung angibt, so dass eine vorgegebene Geometrie des Werkstücks bei der spanenden Bearbeitung erzeugt wird, und der zweite Steuerdatentyp ferner die durch den ersten Steuerdatentyp angegebene Vorschubgeschwindigkeit der Relativbewegung des Werkzeugs zu dem Werkstück zumindest in der zweiten Bearbeitungsrichtung auf Grundlage des Musters, das die vorbestimmten Informationen codiert, ändert oder ersetzt, so dass bei der Relativbewegung des Werkzeugs zu dem Werkstück das Muster auf der Oberfläche des Werkstücks optisch auslesbar erzeugt wird.

Hierdurch können nun die Steuerdaten, die die Geometrie bzw. die Kontur des Werkstücks angeben (Steuerdaten des ersten Typs), durch Steuerdaten eines zweiten Typs, der im Wesentlichen das zu erzeugende Muster angibt, geändert oder gar ersetzt werden, wenn die Bearbeitung der Oberfläche, insbesondere die Bearbeitung und damit die Erzeugung des Musters/Codes, bevorsteht.

In vorteilhafter Weise können die Steuerdaten des zweiten Typs die Steuerdaten des ersten Typs überlagern und ändern, insbesondere im Hinblick auf die von den Steuerdaten des ersten Typs vorgegebene Vorschubgeschwindigkeit (Relativgeschwindigkeit) des Werkzeugs gegenüber dem Werkstück, um dadurch das Muster bzw. den Code auf der Oberfläche des Werkstücks während der Bearbeitung des Werkstücks zu erzeugen.

Dies ist insbesondere dann vorteilhaft möglich, wenn die Steuerdaten des zweiten Typs einen Differenzwert der Vorschubgeschwindigkeit angeben, um welchen Wert die Vorschubgeschwindigkeit der Steuerdaten des ersten Typs zu reduzieren oder zu erhöhen sind und an welcher Stelle diese Reduzierung oder Erhöhung zu erfolgen hat, damit das Muster bzw. der Code auf der Oberfläche des Werkstücks erzeugt wird.

Zudem können aber auch in vorteilhafter Weise die Steuerdaten des ersten Typs durch die Steuerdaten des zweiten Typs, insbesondere im Hinblick auf die von den Steuerdaten des ersten Typs vorgegebene Vorschubgeschwindigkeit des Werkzeugs gegenüber dem Werkstück, ersetzt werden, um eine von der von den Steuerdaten des ersten Typs angegebenen Vorschubgeschwindigkeit differierende Vorschubgeschwindigkeit des Werkzeugs zu dem Werkstücks anzugeben.

Dies ist insbesondere dann vorteilhaft möglich, wenn die Steuerdaten des zweiten Typs einen Absolutwert der Vorschubgeschwindigkeit angeben, der die Vorschubgeschwindigkeit der Steuerdaten des ersten Typs durch einen höheren Wert oder einen niedrigeren Wert ersetzt und an welcher Stelle diese Ersetzung zu erfolgen hat, damit das Muster bzw. der Code auf der Oberfläche des Werkstücks erzeugt wird.

Eine weitere vorteilhafte Weiterbildung des erfindungsgemäßen Verfahrens besteht darin, dass in einer Steuerungsvorrichtung der Werkzeugmaschine die Steuerdaten des ersten Steuerdatentyps von den Steuerdaten des zweiten Steuerdatentyps für die Erzeugung des Musters auf der Oberfläche des Werkstücks überlagert werden, um die Vorschubgeschwindigkeit bei der Relativbewegung des Werkzeugs zu dem Werkstück zu ändern und das Muster auf der Oberfläche des Werkstücks zu erzeugen.

Dabei wird in vorteilhafter Weise eine Überlagerung der Steuerdaten des ersten Typs (Kontur bzw. Geometrie des Werkstücks) mit den Steuerdaten des zweiten Typs (zu erzeugendes Muster/zu erzeugender Code) in der Steuerungsvorrichtung der Werkzeugmaschine durchgeführt.

Insbesondere ist dies von Vorteil, wenn die Überlagerung dieser beiden Steuerdatentypen bereits in der NC-Steuerung (numerische Steuerung) stattfindet, wodurch entsprechend angepasste Daten bereitgestellt werden können, auf Basis derer die Aktoren (z.B. Aktoren der Achsen und/oder die Hauptspindel etc.) der Werkzeugmaschine entsprechend angesteuert werden können.

Eine vorteilhafte Weiterbildung des erfindungsgemäßen Verfahrens liegt zudem darin, dass in einer Steuerungsvorrichtung der Werkzeugmaschine die Steuerdaten des ersten Steuerdatentyps von den Steuerdaten des zweiten Steuerdatentyps für die Erzeugung des Musters auf der Oberfläche des Werkstücks ersetzt werden, um eine von der Vorschubgeschwindigkeit der Steuerdaten des ersten Steuerdatentyps differierende Vorschubgeschwindigkeit bei der Relativbewegung des Werkzeugs zu dem Werkstück anzugeben und das Muster auf der Oberfläche des Werkstücks zu erzeugen.

Dabei wird in vorteilhafter Weise eine Ersetzung der Steuerdaten des ersten Typs (Kontur bzw. Geometrie des Werkstücks) durch die Steuerdaten des zweiten Typs (zu erzeugendes Muster/zu erzeugender Code) in der Steuerungsvorrichtung der Werkzeugmaschine durchgeführt.

Insbesondere ist dies von Vorteil, wenn die Ersetzung dieser beiden Steuerdatentypen bereits in der NC-Steuerung stattfindet, wodurch entsprechend angepasste Daten bereitgestellt werden können, auf Basis derer die Aktoren (z.B. Aktoren der Achsen und/oder die Hauptspindel etc.) der Werkzeugmaschine entsprechend angesteuert werden können.

Das erfindungsgemäße Verfahren kann zudem dadurch vorteilhaft weitergebildet werden, dass mehrere Werkstücke mit dem Verfahren an der numerisch gesteuerten Werkzeugmaschine spanend bearbeiten werden, wobei jedem zu bearbeitenden Werkstück ein vorbestimmte Informationen codierendes Muster zugewiesen wird, wobei sich das zugewiesene, vorbestimmte Informationen codierende Muster des zu bearbeitenden Werkstücks von den Mustern der bereits bearbeiteten Werkstücke unterscheidet.

Dadurch ist es möglich, jedem Werkstück ein individuelles Muster / einen individuellen Code zu geben, der Informationen beinhaltet, die beispielsweise ganz spezifisch für das jeweilige Werkstück sind. Dies kann insbesondere bei Massenproduktionen von großer Bedeutung sein, um z.B. Seriennummern / Chargennummern zu codieren oder um beispielsweise mehrere Werkstücke der gleichen Art einer unterschiedlichen Verwendung zuzuführen (Codierung des Verwendungszwecks oder des Verwendungsortes).

In vorteilhafter Weise kann das erfindungsgemäße Verfahren dadurch weitergebildet werden, dass die Steuerdaten zum Steuern der Relativbewegung des Werkzeugs zu dem Werkstück über ein Netzwerk oder ein Speichermedium zu einer Steuerungsvorrichtung der Werkzeugmaschine übertragen werden, oder die Steuerdaten zum Steuern der Relativbewegung des Werkzeugs zu dem Werkstück manuell über eine Eingabevorrichtung der Steuerungsvorrichtung eingegeben werden.

Hierdurch können auf verschiedenen Wegen die Steuerdaten der Steuerungsvorrichtung zugeführt werden, die dann die weitere Verarbeitung der Steuerdaten durchführt.

Weiterhin kann das erfindungsgemäße Verfahren dadurch vorteilhaft weitergebildet werden, dass die vorbestimmten Informationen, die durch das Muster auf der Oberfläche des Werkstücks codiert werden, Seriennummern, werkstückspezifische Codes und/oder Datenbanken-IDs umfassen.

Dabei soll an dieser Stelle darauf hingewiesen sein, dass die in dem Muster/Code enthaltenen Informationen über die genannten Beispiele hinaus auch noch weitere Informationen beinhalten können, wie z.B. Transportziel des jeweiligen Werkstücks oder Verwendungszweck etc.

Die erfindungsgemäße Werkzeugmaschine zum spanenden Bearbeiten eines Werkstücks, weist auf: ein Spannmittel zum Aufspannen des Werkstücks, eine Werkzeugaufnahme zum Aufnehmen des Werkzeugs zur Bearbeitung des Werkstücks, und eine Steuerungsvorrichtung zum Steuern einer Relativbewegung des Werkzeugs zu dem Werkstück zumindest in einer ersten Bearbeitungsrichtung, wobei die Steuerungsvorrichtung zum Steuern der Relativbewegung des Werkzeugs zu dem Werkstück auf Grundlage von vorgegebenen Steuerdaten zum spanenden Bearbeiten des Werkstücks eingerichtet ist, wobei die Steuerdaten die zu steuernde Relativbewegung des Werkzeugs zu dem Werkstück zumindest in der ersten Bearbeitungsrichtung und eine Vorschubgeschwindigkeit bei der Relativbewegung des Werkzeugs zu dem Werkstück zumindest in der ersten Bearbeitungsrichtung angeben, wobei die Steuerdaten Änderungen der Vorschubgeschwindigkeit bei der Relativbewegung des Werkzeugs zu dem Werkstück zumindest in der ersten Bearbeitungsrichtung angeben, wobei die Änderungen der Vorschubgeschwindigkeit auf Grundlage eines Musters, das vorbestimmte Informationen codiert, vorgegeben sind, wobei die Steuerungsvorrichtung insbesondere auf Basis der Steuerdaten die Relativbewegung des Werkzeugs zu dem Werkstück zumindest in der ersten Bearbeitungsrichtung mit den vorgegebenen Änderungen der Vorschubgeschwindigkeit steuert, sodass bei der Relativbewegung des Werkzeugs zu dem Werkstück auf Grundlage der Steuerdaten das die vorbestimmten Informationen codierende Muster auf der Oberfläche des Werkstücks optisch auslesbar erzeugt wird.

Hierdurch ist es nun möglich, mit der erfindungsgemäßen Werkzeugmaschine das erfindungsgemäße Verfahren zum spanenden Bearbeiten eines Werkstücks mit einem Werkzeug durchzuführen, wobei ferner alle vorgenannten Weiterbildungen des Verfahrens und auch die in den Figuren beschriebenen Schritte mit der erfindungsgemäßen Werkzeugmaschine durchgeführt werden können.

Eine besonders vorteilhafte Weiterbildung der erfindungsgemäßen Werkzeugmaschine besteht darin, dass das Spannmittel zum Aufspannen des Werkstücks in einer Arbeitsspindel der Werkzeugmaschine angeordnet ist und die Werkzeugaufnahme zum Aufnehmen des Werkzeugs an einem Werkzeugschlitten der Werkzeugmaschine angeordnet ist.

Hierbei wird es in vorteilhafter Weise ermöglicht, das erfindungsgemäße Verfahren an einer Drehmaschine durchzuführen, wobei insbesondere das Aufbringen eines Strichcodes auf einer gesamten Umfangsfläche des Werkstücks in vorteilhafter Weise ermöglicht wird.

Eine weitere besonders vorteilhafte Weiterbildung der erfindungsgemäßen Werkzeugmaschine besteht darin, dass das Spannmittel zum Aufspannen des Werkstücks auf einem Maschinentisch der Werkzeugmaschine angeordnet ist und die Werkzeugaufnahme zum Aufnehmen des Werkzeugs in einer Arbeitsspindel der Werkzeugmaschine angeordnet ist.

Hierbei wird es in vorteilhafter Weise ermöglicht, das erfindungsgemäße Verfahren an einer Fräsmaschine durchzuführen, wobei insbesondere das Aufbringen eines Strich- und/oder QR-Codes auf einer Oberfläche des Werkstücks in vorteilhafter Weise ermöglicht wird.

Durch das erfindungsgemäße Verfahren zum spanenden Bearbeiten des Werkstücks und die erfindungsgemäße Werkzeugmaschine wurde es in vorteilhafter Weise ermöglicht, zielgerichtet und aktiv Informationen auf dem Werkstück abzuspeichern bzw. zu hinterlegen.

Zudem wurde mit dem erfindungsgemäßen Verfahren zum spanenden Bearbeiten des Werkstücks und der erfindungsgemäßen Werkzeugmaschine erreicht, dass die Informationen auf dem Werkstück bei jeder Bearbeitung neu codiert werden können (oder auch ergänzt werden können), vor allem, wenn das Werkstück Veränderungen an der mit dem Muster/Code versehenen Oberfläche (zum Beispiel durch weitere Bearbeitungsschritte oder durch "grobes" Handhaben des Werkstücks) erfährt.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt schematisch eine Werkzeugmaschine in der Ausgestaltung einer Drehmaschine für das Durchführen des erfindungsgemäßen Verfahrens;
- Fig. 2: zeigt eine schematische Ansicht eines Systems zum Programmieren eines Steuerungsprogramms für die Werkzeugmaschine gemäß einer beispielhaften Ausführungsform;
- Fig. 3: zeigt eine schematische Ansicht eines Systems zum Programmieren eines Steuerungsprogramms gemäß einer anderen beispielhaften Ausführungsform;
- Fig. 4: zeigt schematisch ein mit einer Werkzeugmaschine nach Fig. 1 bearbeitetes Werkstück, das ein Muster in der Art eines Strichcodes aufweist;
- Fig. 5: zeigt schematisch das erzeugte Muster eines Strichcodes auf der Oberfläche des Werkstücks durch das drehende Bearbeiten des Werkstücks;
- Fig. 6: zeigt schematisch eine Werkzeugmaschine in der Ausgestaltung einer Fräsmaschine für das Durchführen des erfindungsgemäßen Verfahrens;
- Fig. 7: zeigt schematisch ein mit einer Werkzeugmaschine nach Fig. 5 bearbeitetes Werkstück, das ein Muster in der Art eines Strichcodes und/oder eines QR-Codes aufweist;
- Fig. 8: zeigt schematisch das erzeugte Muster a) eines Teils eines Strichcodes und b) eines Teils eines QR-Codes auf der Oberfläche des Werkstücks durch das fräsende Bearbeiten des Werkstücks;
- Fig. 9: zeigt schematisch ein Ablaufdiagramm eines Verfahrens zum spanenden Bearbeiten des Werkstücks an einer numerisch gesteuerten Werkzeugmaschine mit einem Werkzeug;
- Fig. 10: zeigt schematisch die Aufnahme des auf der Oberfläche des Werkstücks erzeugten Musters mittels des Auslesegerätes; diese Ausführungsform ist nicht Teil der Erfindung;

- Fig. 11: zeigt schematisch ein Ablaufdiagramm eines Verfahrens zum Auslesen von auf dem Werkstück codierter Informationen; diese Ausführungsform ist nicht Teil der Erfindung;
- Fig. 12: zeigt schematisch die Umwandlung/Umrechnung eines Strichcodes, der in einer Ebene aufgenommen wurde, in eine eindimensionale Darstellung; diese Ausführungsform ist nicht Teil der Erfindung.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen. Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikation der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

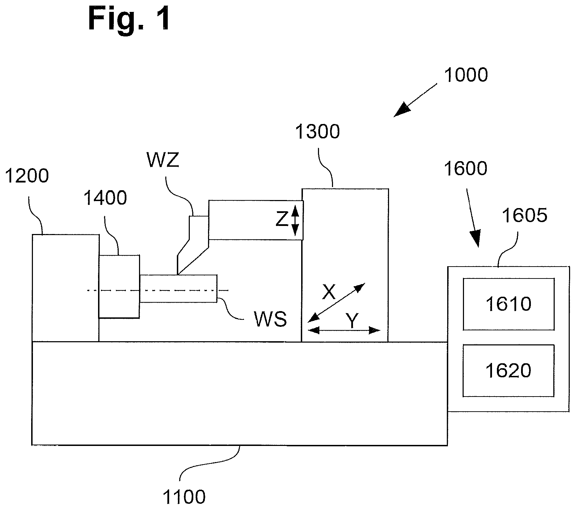

Fig. 1 zeigt schematisch eine Werkzeugmaschine 1000 in der Ausgestaltung einer Drehmaschine. Dabei wird das Werkstück WS von der Hauptspindel 1400 durch eine Aufnahmevorrichtung (z.B. durch ein Backenfutter (Dreibackenfutter etc.), ein Spannfutter oder ein Spanndorn) aufgenommen. Ferner ist die Hauptspindel 1400 über einen Spindelständer 1200 mit dem Maschinenbett 1100 der Werkzeugmaschine 1000 verbunden.

Weiterhin ist auf dem Maschinenbett 1100 der Werkzeugschlitten 1300 gelagert. Dieser kann dabei entlang der X-, der Y- und der Z-Richtung translatorisch gegenüber dem Maschinenbett 1100 und somit gegenüber der Hauptspindel 1400 mit Werkstück WS verfahren werden. Zusätzlich kann der Werkzeugschlitten 1300 um die X- und die Z-Achse verschwenkbar sein, um z.B. das Werkzeug WZ gegenüber dem Werkstück WS für die spanende Bearbeitung optimal positionieren zu können. Weiterhin kann es auch möglich sein, dass die relative Lage des Werkzeugs WZ gegenüber dem Werkstück während der spanenden Bearbeitung verändert wird, um z.B. vorgesehene Geometrien am Werkstück WS durch die spanende Bearbeitung zu erzeugen.

Zudem kann die Werkzeugmaschine 1000 eine Steuerungsvorrichtung 1600 mit einem Steuerpult 1605 aufweisen, das über einen Bildschirm 1610 und einer Eingabevorrichtung 1620 verfügt. Dabei kann die Eingabevorrichtung 1620 ferner dazu eingerichtet sein, Befehle und Eingaben eines Benutzers der Werkzeugmaschine 1000 aufzunehmen (z.B. mittels Tasten, Schiebereglern, Knöpfen, Tastaturen, einer Steuerungsmaus, einer Steuerungskugel, bzw. auch oder in Kombination mit berührungssensitiven Abschnitten des Bildschirms 1610) und sie für die Datenverarbeitung an die Steuerungsvorrichtung 1600 weiterzuleiten.

Der Benutzer kann über seine Eingaben an der Eingabevorrichtung 1620 verschiedene Funktionen der Werkzeugmaschine 1000 durchführen und steuern und zudem, über den Bildschirm 1610 der Steuerungsvorrichtung 1600, den Zustand der Werkzeugmaschine 1000 und die Vorgänge an und in der Werkzeugmaschine 1000 beobachten und verfolgen.

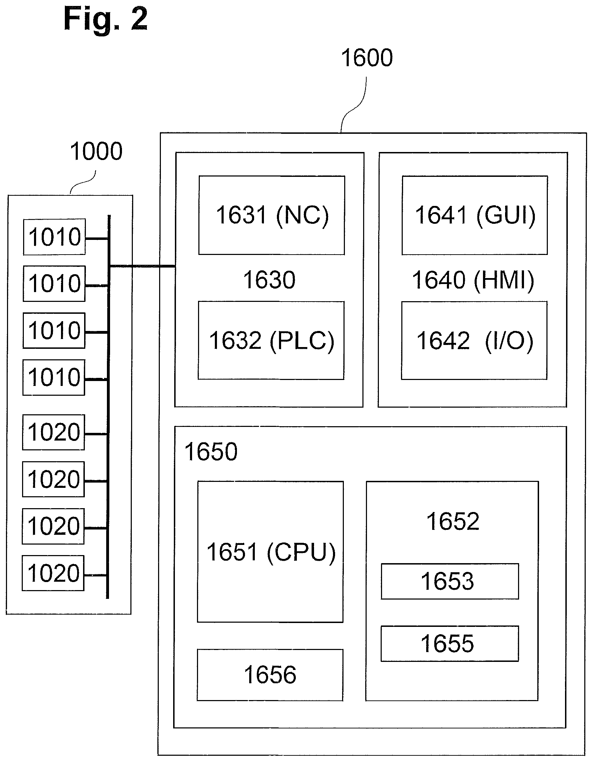

Zudem kann das Steuerpult 1605 derart ausgebildet sein, dass es dem Benutzer das Programmieren eines Steuerungsprogramms für die Werkzeugmaschine 1000 an einer auf dem Bildschirm 1610 der Steuerungsvorrichtung 1600 angezeigten grafischen Benutzeroberfläche (siehe GUI 1641 in der Fig. 2) ermöglicht.

Fig. 2 zeigt beispielhaft eine schematische Ansicht eines Systems zum Programmieren eines Steuerungsprogramms für die Werkzeugmaschine 1000 gemäß einer beispielhaften Ausführungsform, wobei die Werkzeugmaschine 1000 in Fig. 2 lediglich beispielhaft schematisch durch eine Vielzahl von Aktoren 1010, wie etwa Achsantriebe oder dergleichen, und eine Vielzahl von Sensoren 1020 (z.B. Temperatursensoren, Positionssensoren, Drucksensoren usw.) dargestellt ist.

Das System kann dabei beispielsweise eine Steuerungsvorrichtung 1600 mit einer Maschinensteuerung 1630 aufweisen, die typischerweise eine NC-Steuerung 1631 (numerische Steuerung) und eine PLC-Steuerung 1632 (programmierbare Logiksteuerung) umfasst. Des Weiteren kann die Steuerungsvorrichtung 1600 beispielhaft ein HMI 1640 (Human Machine Interface) aufweisen, das eine GUI 1641 (grafische Benutzeroberfläche) und einen E/A-Abschnitt 1642 (Eingabe/Ausgabe-Abschnitt) umfassen kann und weiterhin die Eingabevorrichtung 1620 und den oben genannten Bildschirm 1610 aufweisen kann.

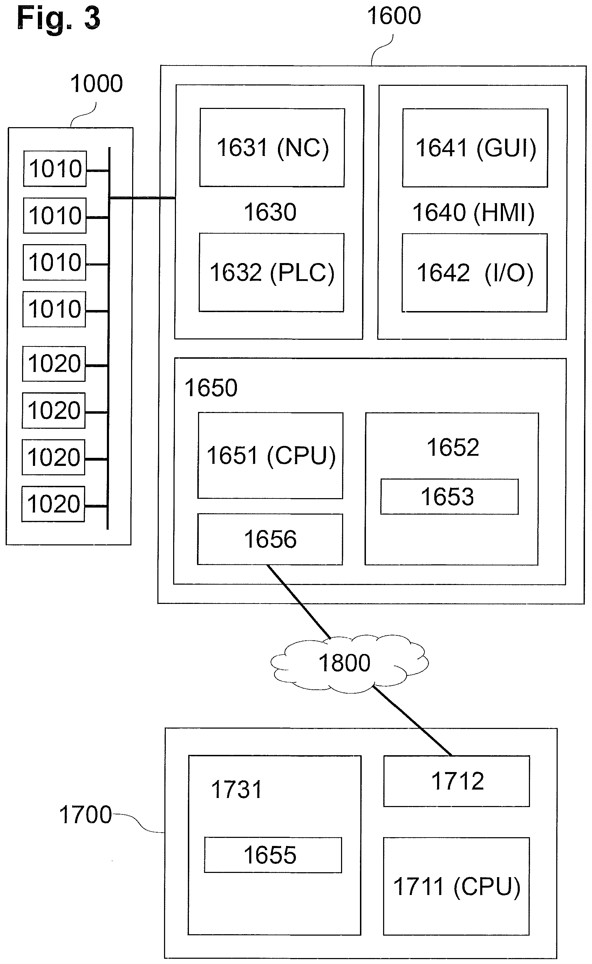

Zudem kann die Steuerungsvorrichtung 1600 beispielhaft einen Computer 1650 umfassen, der eine CPU 1651 und einen Datenspeicher 1652 (z.B. Speicher, Cache, Disk- und/oder Flash-Laufwerke oder dergleichen) enthält. Der Computer 1650 kann ferner eine Schnittstelle 1656 aufweisen, die beispielsweise zum Senden/Empfangen von Daten über ein Netzwerk 1800 (siehe hierzu Fig. 3), über eine drahtgebundene oder drahtlose Verbindung, oder zum Lesen von Daten (z.B. über ein CD-Laufwerk, eine Bluetooth-Verbindung, eine WLAN-Verbindung, über USB- oder Ethernet-Anschlüsse oder andere) eingerichtet ist.

Der Datenspeicher 1652 speichert beispielhaft die Anwendungsdaten 1653 der grafischen Benutzerschnittstelle/Benutzeroberfläche 1641 und verwandte Funktionen und Verarbeitungsmöglichkeiten. Ferner speichert der Datenspeicher 1652 beispielhaft Werkstückdaten 1655, die ein oder mehrere 3D-Modelle zugehöriger Werkstücke WS angeben (z.B. Rohteildaten) und vor allem fertige Teiledaten der Werkstücke WS. Die 3D-Modelle können als allgemein bekannte CAD-Formate gespeichert werden, einschließlich STEP-Daten oder proprietärer CAD-Formate.

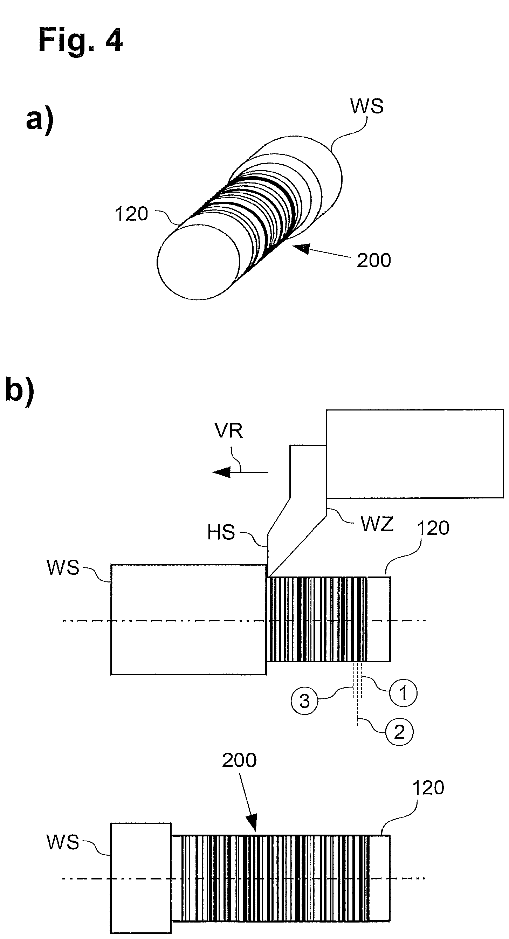

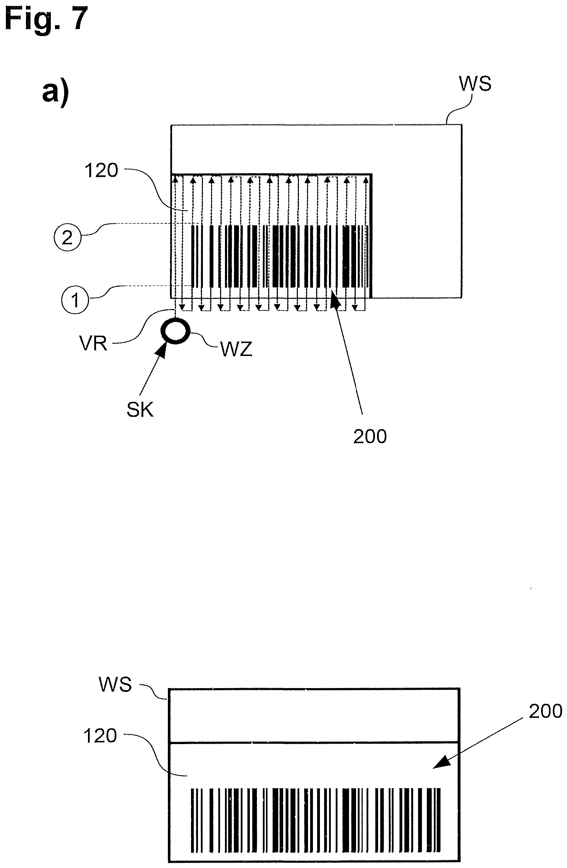

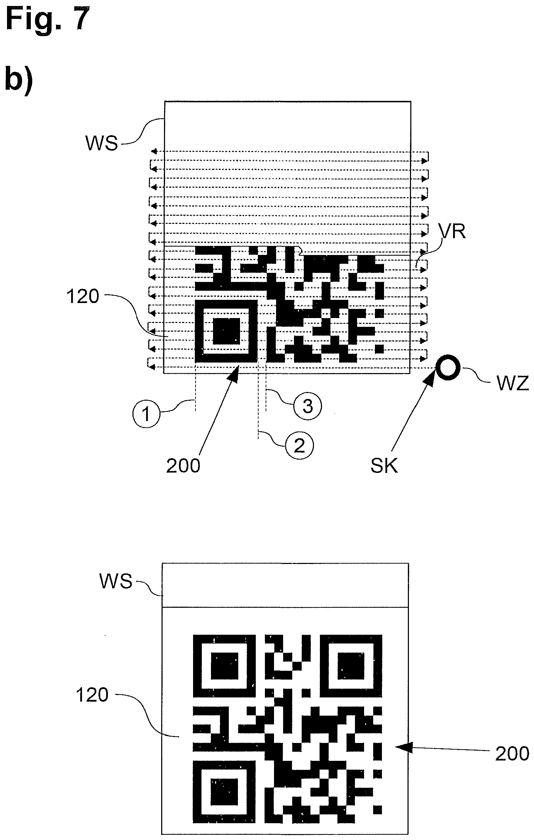

In der beispielhaften Ausführungsform von Fig. 2 können alle Funktionen und Verarbeitungsschritte, die in Ausführungsbeispielen von Fig. 4 bis 6 und dem Verfahren von Fig. 7 erwähnt sind, in der Steuerungsvorrichtung 1600 ausgeführt werden. In anderen beispielhaften Ausführungsformen ist es jedoch weiterhin möglich, dass das Verfahren innerhalb einer Anwenderserverarchitektur ausgeführt wird, in der eine Anwenderapplikation auf dem Computer 1650 läuft, und einige Funktionen oder Verarbeitungsschritte auf einem Server ausgeführt werden, der über ein Netzwerk 1800 kommunizierbar ist, wie z.B. in Fig. 3 gezeigt, einschließlich des zusätzlichen Servers 1700.

Fig. 3 veranschaulicht beispielhaft eine schematische Ansicht eines Systems zum Programmieren eines Steuerungsprogramms gemäß einer anderen beispielhaften Ausführungsform.

Die Steuerungsvorrichtung 1600 ist der Steuerungsvorrichtung 1600 von Fig. 2 ähnlich, jedoch umfassen die Anwendungsdaten 1653 ferner eine Anwenderapplikation, die mit einer Serverapplikation in Verbindung steht, die auf einem Server 1700 läuft, der über das Netzwerk 1800 kommunikativ verbunden ist.

Beispielsweise umfasst der Server 1700 eine CPU 1711 und eine Schnittstelle 1712 (z.B. Netzwerkschnittstelle) zur Verbindung mit dem Netzwerk 1800. Die Schnittstelle 1656 der Steuerungsvorrichtung 1600 ist beispielhaft auch dazu eingerichtet, eine Verbindung mit dem Netzwerk 1800 für Server-Anwender-Kommunikationen herzustellen. Beispielhaft speichert der Datenspeicher 1731 des Servers 1700 die Werkstückdaten 1655.

Fig. 4 zeigt schematisch ein mit einer Werkzeugmaschine 1000 nach Fig. 1 bearbeitetes Werkstück WS, das ein Muster 200 in der Art eines Strichcodes aufweist.

Dabei wurde mittels der Änderung der Vorschubgeschwindigkeit des Werkzeugs WZ relativ zu dem Werkstück WS das Muster 200, dass die vorbestimmten Informationen codiert, auf der Oberfläche 120 des Werkstücks WS erzeugt. Die Änderung der Vorschubgeschwindigkeit während der Bearbeitung des Werkstücks WS und damit verbunden das Erzeugen des Musters 200 wird dabei aus einer Überlagerung von Steuerdaten eines ersten Typs (Werkstück-Steuerdaten), die die Kontur des zu erzeugenden Werkstücks WS angeben (z.B. auf Basis der Werkstückdaten 1655), durch Steuerdaten eines zweiten Typs (Muster-Steuerdaten), die die Vorschubgeschwindigkeit während der Bearbeitung des Werkstücks WS entsprechend des zu erzeugenden Musters 200 ändern (erhöhen oder reduzieren), erreicht.

Hierfür können beispielsweise die Steuerdaten des ersten Typs und die Steuerdaten des zweiten Typs innerhalb der NC-Steuerung 1631 zusammengeführt werden, wodurch bereits in der NC-Steuerung 1631 ein veränderter Bearbeitungszyklus (im Vergleich zu dem Bearbeitungszyklus bei reiner Konturbearbeitung des Werkstücks WS) erstellt werden kann, der bereits das Erzeugen des Musters 200 berücksichtig und später in die entsprechenden Signale für die Aktoren 1010 umgerechnet wird.

Es können aber auch beispielsweise die Steuerdaten des ersten Typs und die Steuerdaten des zweiten Typs innerhalb der NC-Steuerung 1631 getrennt voneinander aufbereitet werden. Die NC-Steuerung 1631 könnte nun auf Basis der Steuerdaten des ersten Typs erste Signale berechnen und entsprechend die Aktoren 1010 der Werkzeugmaschine 1000 für die Konturbearbeitung des Werkstücks WS ansteuern. Ferner könnte die NC-Steuerung 1631 die Steuerdaten des zweiten Typs in zweite Signale umrechnen und diese (als eine Art zusätzliches Signal) mit den ersten Signalen, die auf den Steuerdaten des ersten Typs basieren, überlagern, um die ersten Steuerdaten zu beeinflussen/ändern und dadurch das Erzeugen des Musters 200 auf der Oberfläche 120 des Werkstücks WS herbeizuführen. Ferner kann es aber auch möglich sein, dass die Steuerungsvorrichtung 1600 die Steuerdaten des ersten Typs beim Erzeugen des Musters / Codes 200 durch die Steuerdaten des zweiten Typs ersetzt.

In beiden Fällen kann nun das Muster 200, das die vorbestimmten Informationen codiert, durch die Änderungen der Vorschubgeschwindigkeit auf die Oberfläche 120 des Werkstücks WS während der Bearbeitung des Werkstücks WS, insbesondere in einem Arbeitsschritt mit der Erzeugung der Oberfläche 120 des Werkstücks WS, erzeugt werden. Die vorbestimmten Informationen können dabei z.B. Seriennummern, werkstückspezifische Codes oder Datenbanken-IDs umfassen, die für den weiteren Bearbeitungsprozess oder für die spätere Verwendung (z.B. für die Montage) des gefertigten Werkstücks WS wichtig sind.

Zusätzlich kann es vorteilhaft sein, wenn das Muster 200, das die vorbestimmten Informationen codiert, zunächst in der Steuerungsvorrichtung 1600 virtuell erzeugt wird, auf Basis dessen die Steuerdaten für die Aktoren der Werkzeugmaschine 1000 generiert werden und somit das betreffende Muster 200 auf der Oberfläche 120 des Werkstücks erzeugt werden kann.

Im Prozess der Erzeugung des Musters 200 auf der Oberfläche 120 des Werkstücks WS kann es zudem von Vorteil sein, dass während der Erzeugung des Musters 200 mittels des Werkzeugs WZ die Rotationsgeschwindigkeit des Werkstücks WS durch die Hauptspindel 1400 der Werkzeugmaschine 1000 (nach Fig. 1) konstant gehalten wird, so dass keine zusätzlichen Veränderungen der relativen Geschwindigkeit von Werkstück WS zu Werkzeug WZ auftreten.

Ferner kann es aber auch von Vorteil sein, dass während der Erzeugung des Musters 200 mittels des Werkzeugs WZ die Rotationsgeschwindigkeit des Werkstücks WS durch die Hauptspindel 1400 der Werkzeugmaschine 1000 (nach Fig. 1) zusätzlich zu der Vorschubgeschwindigkeit des Werkzeugs WZ (mittels des Werkzeugschlittens 1300) zu dem Werkstück WS verändert wird, um z.B. weitere optische Effekte für die Codierung der vorbestimmten Informationen in dem Muster 200 zu erzeugen oder um flexibler mit den vorhandenen Aktoren (neben den Antrieben des Werkzeugschlittens 1300 für dessen translatorische Bewegung z.B. eben auch die Hauptspindel 1400 selbst) das gewünschte Muster 200 auf der Oberfläche 120 des Werkstücks WS zu erzeugen.

Dabei können die genannten Möglichkeiten der Erzeugung des Musters 200 auch während der Erzeugung der Oberfläche 120 selbst (z.B. durch spanende Bearbeitung des Werkstücks WS) angewendet werden, so dass das Erzeugen der Oberfläche 120 und das Erzeugen des Musters 200 auf dem Werkstück WS gleichzeitig (in einem Arbeitsschritt) erfolgt.

Insbesondere bei Drehteilen, wie in der Darstellung a) der Fig. 4 gezeigt, kann in vorteilhafter Weide das Muster 200 auf der gesamten Umfangsfläche der Oberfläche 120 des Werkstücks WS erzeugt werden.

Die Darstellung b) der Fig. 4 soll nun verdeutlichen, wie im Einzelnen die Strichcodierung des die vorbestimmten Informationen codierenden Musters 200 auf der Oberfläche 120 des Werkstücks WS erzeugt werden, wobei die Vorschubrichtung VR zeigt, in welche Richtung das Werkzeug WZ relativ zu dem Werkstück WS während des Vorschubs bewegt wird.

Zu Beginn wird die Hauptschneide HS des Werkzeugs WZ mit dem Werkstück WS entlang der Vorschubrichtung VR in Eingriff gebracht, so dass eine spanende Bearbeitung des Werkstücks WS durch das Werkzeug WZ erfolgt.

Soll nun, wie in Fig. 4 gezeigt, ein Muster 200 in der Art eines Strichcodes erzeugt werden, so sind exemplarisch hierfür in der Darstellung b) der Fig. 4 die Punkte 1 bis 3 angegeben, die jeweils einen Ortspunkt der Hauptschneide HS des Werkzeugs WZ gegenüber dem Werkstück WS markieren, an dem eine Änderung der Vorschubgeschwindigkeit des Werkzeugs WZ gegenüber dem Werkstück WS stattfindet. Der besseren Übersicht halber wurden die Punkte an zwei stärkeren Strichen des Strichcodes beispielhaft positioniert.

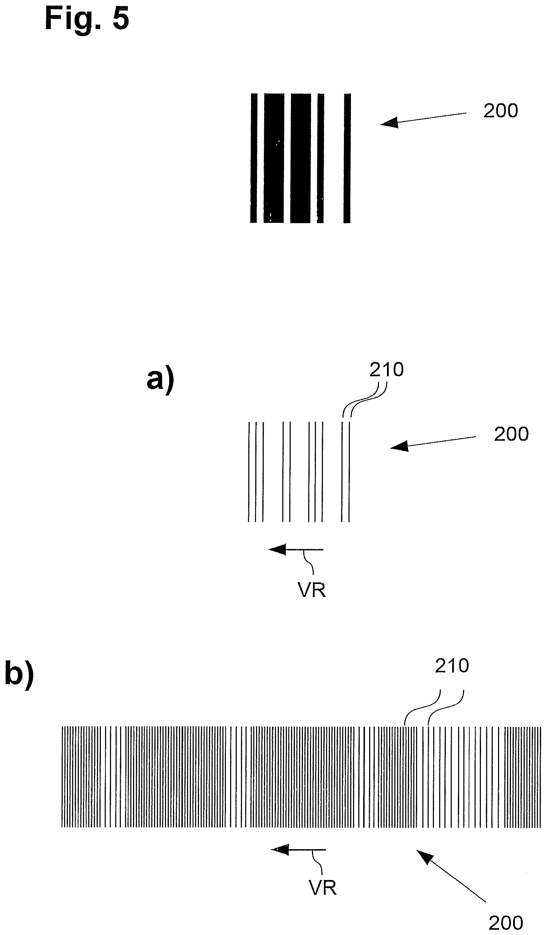

Dabei kann das Werkzeug WZ bereits das Werkstück WS spanend bearbeiten. Erreicht nun die Hauptschneide HS entlang der Vorschubrichtung den Ortspunkt 1, wird beispielsweise eine Änderung der Vorschubgeschwindigkeit herbeigeführt und dadurch die Relativgeschwindigkeit von Werkzeug WZ zu Werkstück WS verändert, beispielsweise kann die Relativgeschwindigkeit am Ortspunkt 1 erhöht werden. Dadurch wird nun, wie in Fig. 4 b) gezeigt, eine erste Drehrille 210 (hier nicht gezeigt, siehe Fig. 5) zur Markierung des Beginns eines ersten Striches (hier schwarz dargestellt) erzeugt.

Über einen bestimmten Vorschub des Werkzeugs WZ zum Werkstück WS hinweg, welcher der zu erzeugenden Strichbreite des ersten Striches entspricht, wird nun die veränderte Relativgeschwindigkeit von Werkzeug WZ zu Werkstück WS aufrecht erhalten, bis die Hauptschneide HS des Werkzeugs WZ den Ortspunkt 2 erreicht, an dem die Relativgeschwindigkeit von Werkzeug WZ zu Werkstück WS beispielsweise wieder auf die ursprüngliche Relativgeschwindigkeit reduziert wird und somit eine zweite Drehrille 210 (hier nicht gezeigt, siehe Fig. 5) zur Markierung des Beginns eines Abschnitts ohne Strich (im Folgenden teilweise auch als Lücke bezeichnet; hier weiß dargestellt) erzeugt wird. Erreicht die Hauptschneide HS des Werkzeugs WZ nach einem bestimmten Vorschub des Werkzeugs WZ zum Werkstück WS nun den Ortspunkt 3, wird die Relativgeschwindigkeit von Werkzeug WZ zu Werkstück WS entsprechend des Beispiels wieder erhöht, um eine dritte Drehrille 210 (hier nicht gezeigt, siehe Fig. 5) zur Markierung des Beginns eines weiteren Striches (wieder schwarz dargestellt) in Vorschubrichtung VR zu erzeugen.

An dieser Stelle sei darauf hingewiesen, dass das genannte Beispiel nicht darauf beschränkt ist, dass bei Erhöhung der Relativgeschwindigkeit von Werkzeug WZ zu Werkstück WS eine Drehrille 210 erzeugt wird, es kann beispielsweise ebenfalls eine Drehrille 210 durch eine Reduzierung der Relativgeschwindigkeit von Werkzeug WZ zu Werkstück WS erzeugt werden.

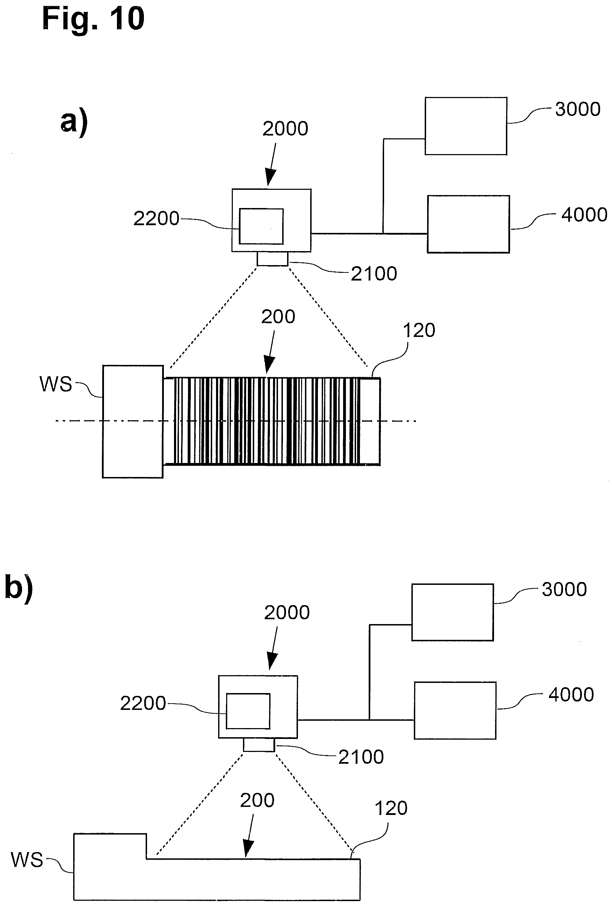

Insbesondere kann es vorteilhaft sein, das Muster 200 (hier der Barcode/Strichcode auf Basis von Drehrillen 210) sehr fein auf der Oberfläche 120 des Werkstücks WS auszubilden, so dass das Muster 200 mit bloßem menschlichem Auge nicht mehr zu erfassen ist, sondern nur noch Auslesegeräte (hier nicht gezeigt, siehe beispielsweise Fig. 10) das Muster 200, insbesondere die Drehrillen 210 erkennen können.

Fig. 5 zeigt schematisch zwei unterschiedliche Möglichkeiten, ein Muster 200 (hier einen Strichcode) mittels einer Drehbearbeitung eines Werkstücks WS in Vorschubrichtung VR zu erzeugen.

Dabei wird in Darstellung a) das Muster 200 lediglich durch Drehrillen 210 wiedergegeben, die die Kanten bzw. die Übergänge von einem Strich zu einer Lücke bzw. den Übergang von einer Lücke zu einem Strich des Musters 200 markieren.

Der Vorteil dieser Erzeugung des Musters 200 liegt darin, dass das Muster 200 auf einer vergleichsweise sehr kurzen Länge des zu drehenden Bereiches des Werkstücks WS aufgebracht werden kann, da zu seiner Darstellung nur wenige Drehrillen 210 nötig sind.

Weiterhin kann aber auch, wie in Darstellung b) verdeutlicht, eine Umsetzung des Musters 200 derart erfolgen, dass mehrere Drehrillen 210 sehr eng beieinander erzeugt werden, um einen Strich des Musters 200 zu repräsentieren, und wiederum mehrere Drehrillen 210 mit einem deutlich größeren Abstand zueinander erzeugt werden, um eine Lücke des Musters 200 zu repräsentieren, wobei die Anzahl und/oder auch die Breite der so durch mehrere Drehrillen 210 erzeugten Striche/Lücken das im Wesentlichen gleiche Verhältnis zueinander aufweisen wie die Striche/Lücken bei dem ursprünglichen Strichcode.

Im Vergleich zu der verwendeten Methode wie in Darstellung a) gezeigt, bietet die Methode aus Darstellung b) den Vorteil, dass das so erzeugte Muster 200 einfacher ausgelesen werden kann, da beispielsweise nur die Abstände der jeweils benachbarten Drehrillen 210 erfasst werden müssen, um eine Identifizierung von Strich bzw. Lücke im Muster 200 zu ermöglichen. Alternativ oder Ergänzend kann hier natürlich auch die Breite der jeweilig dargestellten Striche/Lücken zur Auswertung genutzt werden.

Hingegen müssen für die Auswertung bzw. Erfassung des Musters 200 nach der Methode in Darstellung a) neben den Abständen der Drehrillen 210, die den Übergang von Strich zu Lücke bzw. von Lücke zu Strich repräsentieren, eine Festlegung erfolgen, welche erfasste Drehrille 210 den Beginn eines Striches, oder den Beginn einer Lücke darstellt und im Verlauf überprüft werden, ob diese Annahme korrekt ist.

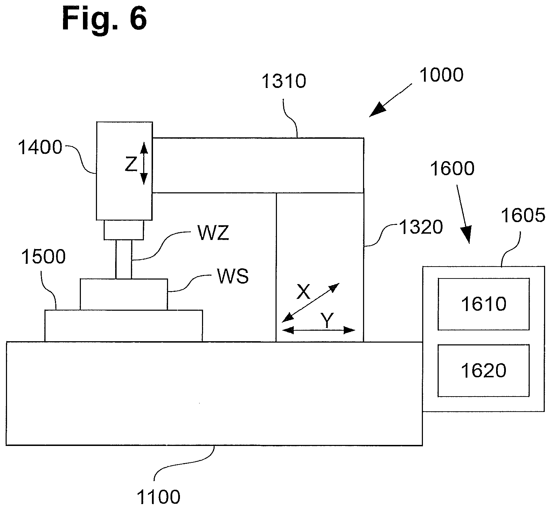

Ist die Annahme korrekt gewesen, ergibt sich aus den erfassten Drehrillen 210 ein auslesbarer Strichcode mit entsprechenden Informationen. Ist jedoch die Annahme nicht korrekt, so muss die zuerst getroffene Annahme dahingehend verändert werden, dass was bei der ersten Annahme Striche des Strichcodes waren, nun Lücken sind. Daraufhin wird erneut überprüft, ob mittels der neuen Annahme der Strichcode auslesbar wird. Fig. 6 zeigt schematisch eine Werkzeugmaschine 1000 in der Ausgestaltung einer Fräsmaschine (z.B. einer numerisch gesteuerten Fräsmaschine). Dabei wird das Werkstück WS auf dem Maschinentisch 1500, der auf dem Maschinenbett 1100 angeordnet ist, durch eine Aufspannvorrichtung (z.B. durch Kraftspanner und Spannpratzen) aufgespannt. Ferner ist die Hauptspindel 1400 über einen Spindelständer 1310/1320 mit dem Maschinenbett 1100 der Werkzeugmaschine 1000 verbunden.

Der Spindelständer 1310/1320 kann dabei entlang der X- und der Y-Richtung translatorisch gegenüber dem Maschinenbett 1100 und somit gegenüber dem Maschinentisch 1500 mit Werkstück WS verfahren werden. Zusätzlich kann die Hauptspindel 1400 gegenüber dem Spindelständer 1310/1320 entlang der Z-Richtung translatorisch verfahren werden. Weiterhin kann die Werkzeugmaschine 1000 derart eingerichtet sein, dass es sich bei dem Maschinentisch 1500 um einen Dreh- und/oder Schwenktisch handelt, um z.B. das Werkstück WS gegenüber dem Werkzeug WZ für die spanende Bearbeitung optimal positionieren zu können. Weiterhin kann es auch möglich sein, dass die relative Lage des Werkzeugs WZ gegenüber dem Werkstück während der spanenden Bearbeitung verändert wird, um z.B. vorgesehene Geometrien am Werkstück WS durch die spanende Bearbeitung zu erzeugen.

Zudem kann die Werkzeugmaschine 1000 eine Steuerungsvorrichtung 1600 mit einem Steuerpult 1605 aufweisen, das über einen Bildschirm 1610 und einer Eingabevorrichtung 1620 verfügt. Für eine detaillierte Beschreibung der Steuerungsvorrichtung 1600 sowie des Systems zum Programmieren eines Steuerungsprogramms wird auf die diesbezüglichen Ausführungen unter Fig. 1 bis 3 verwiesen.

Fig. 7 zeigt schematisch ein mit einer Werkzeugmaschine 1000 nach Fig. 6 bearbeitetes Werkstück WS, das ein Muster 200 in der Art eines Strichcodes (siehe Darstellung a)) und/oder eines QR-Codes (siehe Darstellung b)) aufweist.

Es sei an dieser Stelle darauf hingewiesen, dass auch hier mittels der Änderung der Vorschubgeschwindigkeit des Werkzeugs WZ relativ zu dem Werkstück WS das Muster 200, dass die vorbestimmten Informationen codiert, auf der Oberfläche 120 des Werkstücks WS erzeugt wurde. Die Änderung der Vorschubgeschwindigkeit während der Bearbeitung des Werkstücks WS und damit verbunden das Erzeugen des Musters 200 wird dabei aus einer Überlagerung von Steuerdaten eines ersten Typs (Werkstück-Steuerdaten), die die Kontur des zu erzeugenden Werkstücks WS angeben, durch Steuerdaten eines zweiten Typs (Muster-Steuerdaten), die die Vorschubgeschwindigkeit während der Bearbeitung des Werkstücks WS entsprechend des zu erzeugenden Musters 200 ändern (erhöhen oder reduzieren), erreicht.

Hierfür können beispielsweise wieder die Steuerdaten des ersten Typs und die Steuerdaten des zweiten Typs innerhalb der NC-Steuerung 1631 zusammengeführt/überlagert werden, wodurch bereits in der NC-Steuerung 1631 ein veränderter Bearbeitungszyklus (im Vergleich zu dem Bearbeitungszyklus bei reiner Konturbearbeitung des Werkstücks WS) erstellt werden kann, der bereits das Erzeugen des Musters 200 berücksichtig und später in die entsprechenden Signale für die Aktoren 1010 umgerechnet wird.

Es können aber auch beispielsweise wieder die Steuerdaten des ersten Typs und die Steuerdaten des zweiten Typs innerhalb der NC-Steuerung 1631 getrennt voneinander aufbereitet werden. Die NC-Steuerung 1631 könnte auch hier auf Basis der Steuerdaten des ersten Typs erste Signale berechnen und entsprechend die Aktoren 1010 der Werkzeugmaschine 1000 für die Konturbearbeitung des Werkstücks WS ansteuern. Ferner könnte die NC-Steuerung 1631 die Steuerdaten des zweiten Typs in zweite Signale umrechnen und diese (als eine Art zusätzliches Signal) mit den ersten Signalen, die auf den Steuerdaten des ersten Typs basieren, überlagern, um die ersten Steuerdaten zu beeinflussen/ändern und dadurch das Erzeugen des Musters 200 auf der Oberfläche 120 des Werkstücks WS herbeizuführen. Ferner kann es aber auch möglich sein, dass die Steuerungsvorrichtung 1600 die Steuerdaten des ersten Typs beim Erzeugen des Musters / Codes 200 durch die Steuerdaten des zweiten Typs ersetzt.

Somit kann in den beiden gezeigten Fällen das Muster 200, das die vorbestimmten Informationen codiert, durch die Änderungen der Vorschubgeschwindigkeit auf die Oberfläche 120 des Werkstücks WS während der Bearbeitung des Werkstücks WS, insbesondere in einem Arbeitsschritt mit der Erzeugung der Oberfläche 120 des Werkstücks WS, erzeugt werden.

Jedoch ist die Umsetzung des zu erzeugenden Musters 200 auf der Oberfläche 120 des Werkstücks WS bei einer Fräsbearbeitung komplexer als bei einer Drehbearbeitung. Grund dafür ist, dass zur Erzeugung des Musters 200 nun nicht einfach nur gerade Linien auf der Oberfläche 120 des Werkstücks WS erzeugt werden, sondern aufgrund der fräsenden Bearbeitung kreisförmige Linien auf der Oberfläche 120 entstehen.

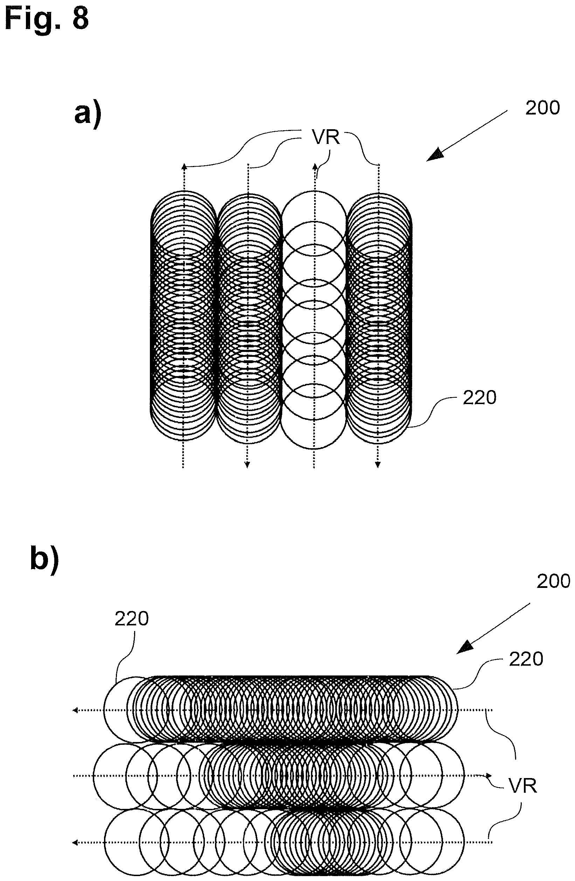

Diese derart anzuordnen, dass später sowohl ein eindimensionaler als auch ein zweidimensionaler Code ausgelesen werden kann, erfordert einen höheren Aufwand. Hierfür sei bereits jetzt auf die Erläuterungen zu Fig. 8 verwiesen.

Wird für das Erzeugen des Musters 200 nun eine Werkzeugmaschine 1000 (hier Fräsmaschine) nach Fig. 6 verwendet, kann es von Vorteil sein, dass während der Erzeugung des Musters 200 mittels des Werkzeugs WZ die Rotationsgeschwindigkeit (und somit die Schnittgeschwindigkeit) des Werkzeugs WZ durch die Hauptspindel 1400 der Werkzeugmaschine 1000 konstant gehalten wird, so dass keine zusätzlichen Veränderungen der relativen Geschwindigkeit von Werkstück WS zu Werkzeug WZ auftreten.

Ferner kann es aber auch von Vorteil sein, dass während der Erzeugung des Musters 200 mittels des Werkzeugs WZ die Rotationsgeschwindigkeit des Werkzeugs WZ durch die Hauptspindel 1400 der Werkzeugmaschine 1000 (nach Fig. 6) zusätzlich zu der Vorschubgeschwindigkeit des Werkzeugs WZ (mittels des Spindelständers 1310/1320) zu dem Werkstück WS verändert wird, um z.B. weitere optische Effekte für die Codierung der vorbestimmten Informationen in dem Muster 200 zu erzeugen oder um flexibler mit den vorhandenen Aktoren (neben den Antrieben des Spindelständers 1310/1320 für die translatorische Bewegung des Spindelständers 1310/1320 z.B. eben auch die Hauptspindel 1400 selbst) das gewünschte Muster 200 auf der Oberfläche 120 des Werkstücks WS zu erzeugen.

Dabei können die genannten Möglichkeiten der Erzeugung des Musters 200 auf der Oberfläche 120 des Werkstücks WS ferner auch während der Erzeugung der Oberfläche 120 selbst (z.B. durch spanende Bearbeitung des Werkstücks WS) angewendet werden, so dass das Erzeugen der Oberfläche 120 und das Erzeugen des Musters 200 auf dem Werkstück WS parallel (in einem Arbeitsschritt) erfolgt.

Die obere Abbildung in der Darstellung a) der Fig. 7 verdeutlicht nun, welchen Verfahrweg das Werkzeug WZ relativ zu dem Werkstück WS nehmen kann, um das Muster 200 auf der Oberfläche 120 des Werkstücks WS zu erzeugen, wobei die Vorschubrichtung VR durch die jeweiligen Pfeile des Verfahrweges gekennzeichnet ist.

Zu Beginn wird das fräsende Werkzeug WZ mit dem Werkstück WS entlang der Vorschubrichtung VR in Eingriff gebracht, so dass eine spanende Bearbeitung des Werkstücks WS durch das Werkzeug WZ erfolgt.

Soll nun, wie in der Darstellung a) der Fig. 7 gezeigt, ein Muster 200 in der Art eines Strichcodes auf der Oberfläche 120 des Werkstücks WS mittels einer Fräsmaschine nach Fig. 6 erzeugt werden, so sind exemplarisch hierfür die Punkte 1 und 2 angegeben, die jeweils einen Ortspunkt der in Vorschubrichtung VR am weitesten vorn befindlichen Schneidkontur SK des Werkzeugs WZ, die mit dem Werkstück WS in Eingriff ist, gegenüber dem Werkstück WS markieren, an dem eine Änderung der Vorschubgeschwindigkeit des Werkzeugs WZ gegenüber dem Werkstück WS stattfindet.

Dabei kann das Werkzeug WZ bereits das Werkstück WS fräsend bearbeiten. Erreicht nun die Schneidkontur SK entlang der Vorschubrichtung den Ortspunkt 1, wird beispielsweise eine erste Änderung der Vorschubgeschwindigkeit herbeigeführt und dadurch die Relativgeschwindigkeit von Werkzeug WZ zu Werkstück WS verändert, beispielsweise kann die Relativgeschwindigkeit am Ortspunkt 1 erhöht werden. Dadurch wird nun, wie in Fig. 7 a) gezeigt, ein erster Strich (hier wieder schwarz dargestellt) des Musters 200 auf der Oberfläche 120 des Werkstücks WS erzeugt.

Dabei soll an dieser Stelle auf die Ausführungen zu Fig. 8 verwiesen werden, die detaillierter beschreiben, dass durch die Erhöhung der Relativgeschwindigkeit (wie hier am Ortspunkt 1) damit begonnen wird, eine Mehrzahl von nah beieinander liegenden Fräsrillen 220 zu erzeugen, wobei die nah beieinander liegenden Fräsrillen 220 zusammen einen Strich (oder zumindest einen Teil des Striches) des Strichcodes wiedergeben (wie in Fig. 8 a) beispielhaft gezeigt).

Über einen bestimmten Vorschub des Werkzeugs WZ zum Werkstück WS hinweg, wird nun die veränderte Relativgeschwindigkeit von Werkzeug WZ zu Werkstück WS konstant gehalten und dadurch die auftretenden Fräsrillen 220 ebenfalls nah beieinander angeordnet, bis die Schneidkontur SK des Werkzeugs WZ den Ortspunkt 2 erreicht, an dem die Relativgeschwindigkeit von Werkzeug WZ zu Werkstück WS beispielsweise wieder auf die ursprüngliche Relativgeschwindigkeit reduziert wird und somit ein Abschnitt mit weiter auseinander liegenden Fräsrillen 220 erzeugt wird, der einen Bereich ohne Strich bzw. einen Bereich einer Lücke des Musters (hier wieder weiß dargestellt) entspricht. Somit kann nun Strich für Strich des Musters 200 auf der Oberfläche 120 des Werkstücks WS erzeugt werden (siehe hierzu auch die Erläuterungen zu Fig. 8).

Es sei an dieser Stelle darauf hingewiesen, dass der Verfahrweg des Werkzeugs WZ relativ zu dem Werkstück WS nicht auf den gezeigten Verfahrweg beschränkt ist. Vielmehr könnte zum Beispiel das Werkzeug WZ im Wesentlichen rechtwinklig zu den Strichen des Musters 200 (Strichcode) geführt und dadurch das Werkstück bearbeitet bzw. der Strichcode auf der Oberfläche 120 des Werkstücks WS erzeugt werden.

Auch hier können teilweise wieder sehr feine Muster auf der Oberfläche 120 des Werkstücks WS erzeugt werden. Bei einer Fräsbearbeitung des Werkstücks WS können beispielsweise 10 Striche auf einer Länge von 1 mm der Oberfläche 120 des Werkstücks WS erzeugt werden. Je nach Material und Werkzeug können aber auch noch feinere Strukturen auf der Oberfläche 120 des Werkstücks WS erzeugt werden.

Zudem sei darauf hingewiesen, dass die Größe des in Darstellung a) der Fig. 7 gezeigten Werkzeuges WZ nicht unbedingt maßstäblich zu der gezeigten Größe des Werkstücks WS und/oder der Größe der auf der Oberfläche 120 des Werkstücks WS aufgebrachten Striche des Musters/Strichcodes 200 ist. Das Werkzeug WZ könnte kleiner oder aber auch größer als das gezeigte Werkzeug ausgebildet sein. Auch ist das Werkzeug WZ nicht auf eine bestimmte Fräsgeometrie beschränkt. Es können verschiedenste Fräswerkzeuge mit entsprechend verschiedensten Fräs- bzw. Schneidgeometrien für das Erzeugen des Musters 200 auf der Oberfläche 120 des Werkstücks WS verwendet werden.

Die untere Abbildung der Darstellung a) der Fig. 7 soll nun das erzeugte Muster 200 auf der Oberfläche 120 des Werkstücks WS zeigen, das durch das erfindungsgemäße Verfahren an einer Werkzeugmaschine 1000 (hier Fräsmaschine) erzeugt wurde.

Die obere Abbildung der Darstellung b) der Fig. 7 zeigt nun schematisch, wie ein Muster 200 in der Art eines QR-Codes auf der Oberfläche 120 des Werkstücks WS erzeugt werden kann, wobei die Vorschubrichtung VR wieder durch die jeweiligen Pfeile des Verfahrweges gekennzeichnet ist. Das Erzeugen des Musters 200 soll exemplarisch wieder anhand der Punkte 1 bis 3 erläutert werden, die jeweils einen Ortspunkt der in Vorschubrichtung VR am weitesten vorn befindlichen Schneidkontur SK des Werkzeugs WZ, die mit dem Werkstück WS in Eingriff ist, gegenüber dem Werkstück WS markieren, an dem eine Änderung der Vorschubgeschwindigkeit des Werkzeugs WZ gegenüber dem Werkstück WS stattfindet.

Dabei kann das Werkzeug WZ wieder bereits das Werkstück WS fräsend bearbeiten. Erreicht die Schneidkontur SK entlang der Vorschubrichtung den Ortspunkt 1, wird beispielsweise eine erste Änderung der Vorschubgeschwindigkeit herbeigeführt und dadurch die Relativgeschwindigkeit von Werkzeug WZ zu Werkstück WS verändert, beispielsweise kann die Relativgeschwindigkeit am Ortspunkt 1 erhöht werden. Dadurch wird nun, wie in Fig. 7 b) gezeigt, mit der Erzeugung eines ersten Abschnittes des QR-Codes (hier schwarz dargestellt) begonnen und in Vorschubrichtung VR fortlaufend erzeugt (siehe hierfür auch die Erläuterungen zu Fig. 8).

Über einen bestimmten Vorschub des Werkzeugs WZ zum Werkstück WS hinweg, welcher der Länge des zu erzeugenden ersten Abschnittes des QR-Codes in Vorschubrichtung VR entspricht, wird nun die veränderte (in diesem Beispiel erhöhte) Relativgeschwindigkeit von Werkzeug WZ zu Werkstück WS konstant gehalten, bis die Schneidkontur SK des Werkzeugs WZ den Ortspunkt 2 erreicht, an dem die Relativgeschwindigkeit von Werkzeug WZ zu Werkstück WS beispielsweise wieder auf die ursprüngliche Relativgeschwindigkeit reduziert wird und somit ein Abschnitt des QR-Codes ohne Markierung (hier weiß dargestellt) begonnen wird. Erreicht die Schneidkontur SK des Werkzeugs WZ nach einem bestimmten Vorschub des Werkzeugs WZ zum Werkstück WS nun den Ortspunkt 3, wird die Relativgeschwindigkeit von Werkzeug WZ zu Werkstück WS entsprechend des Beispiels wieder erhöht, um einen weiteren Abschnitt (wieder schwarz dargestellt) des QR-Codes in Vorschubrichtung VR zu erzeugen.

Es sei an dieser Stelle darauf hingewiesen, dass der Verfahrweg des Werkzeugs WZ relativ zu dem Werkstück WS nicht auf den gezeigten Verfahrweg beschränkt ist. Vielmehr könnte zum Beispiel das Werkzeug WZ im Wesentlichen senkrecht zu dem gezeigten Verfahrweg bzw. zu der gezeigten Vorschubrichtung VR geführt und dadurch das Werkstück WS bearbeitet bzw. der QR-Code auf der Oberfläche 120 des Werkstücks WS erzeugt werden.

Eine Größe (hier Durchmesser) des Werkzeugs WZ in der Breite der zu erzeugenden Abschnitte des QR-Codes ist zwar von Vorteil, aber nicht zwingend notwendig, wie dies in der Darstellung b) der Fig. 7 gezeigt ist. Das Werkzeug WZ kann auch weiterhin kleiner oder größer als die gezeigte Breite der Abschnitte (schwarz dargestellt) des QR-Codes ausgebildet sein.

Weiterhin sei an dieser Stelle darauf hingewiesen, dass die genannten Beispiele der Erzeugung eines Strichcodes in Fig. 7 a) oder eines QR-Codes in Fig. 7 b) nicht darauf beschränkt sind, dass bei Erhöhung der Relativgeschwindigkeit von Werkzeug WZ zu Werkstück WS ein Strich bzw. ein QR-Code-Abschnitt (schwarz dargestellt) erzeugt wird, es kann beispielsweise ebenfalls ein Strich bzw. ein QR-Code-Abschnitt (schwarz dargestellt) durch eine Reduzierung der Relativgeschwindigkeit von Werkzeug WZ zu Werkstück WS erzeugt werden.

Fig. 8 zeigt schematisch das erzeugte Muster 200 eines Teils eines Strichcodes (Darstellung a)) und eines Teils eines QR-Codes (Darstellung b)) auf der Oberfläche 120 des Werkstücks WS durch das fräsende Bearbeiten des Werkstücks WS.

Dabei ist in Darstellung a) beispielhaft zu sehen, wie der Teil des Strichcodes als Muster 200 durch Fräsrillen 220 erzeugt werden kann, wobei die dunkleren Bereiche, die beispielsweise die Striche des Strichcodes wiedergeben können, durch nah beieinander liegende Fräsrillen 220 erzeugt werden und die hellen Bereiche, die beispielsweise die Lücken des Strichcodes wiedergeben können, durch weiter beabstandete Fräsrillen 220 erzeugt werden.

Dabei kann unter anderem der Abstand der Fräsrillen 220 zueinander über die Vorschubgeschwindigkeit in Vorschubrichtung VR gesteuert werden, so dass auf Basis der Vorschubgeschwindigkeit in Vorschubrichtung VR festgelegt werden kann, wann ein Strich und wann eine Lücke des Strichcodes erzeugt wird.

Dem gleichen Prinzip zugrunde liegend kann so ebenfalls ein zweidimensionaler Code wie ein QR-Code als Muster 200 auf der Oberfläche 120 des Werkstücks WS erzeugt werden, wie dieser teilweise in Darstellung b) gezeigt ist.

Dabei kann die Vorschubgeschwindigkeit in der Vorschubrichtung VR wieder ganz gezielt verändert werden, um so den Abstand der benachbarten Fräsrillen 220 zueinander anzupassen und dadurch gezielt Informationen in einem daraus entstehenden QR-Code (oder einen anderen zweidimensionalen Code) zu speichern.

In beiden Fällen können nun zum Auslesen des so erzeugten Musters 200 beispielsweise wieder die Abstände der (benachbarten) Fräsrillen 220 zueinander erfasst werden, um Striche/Lücken des Strichcodes bzw. die verschiedenen Abschnitte des QR-Codes zu erfassen. Alternativ oder Ergänzend kann hier natürlich auch wieder die Breite der jeweilig dargestellten Striche/Lücken des Strichcodes bzw. der unterschiedlichen Abschnitte des QR-Codes zur Auswertung genutzt werden.

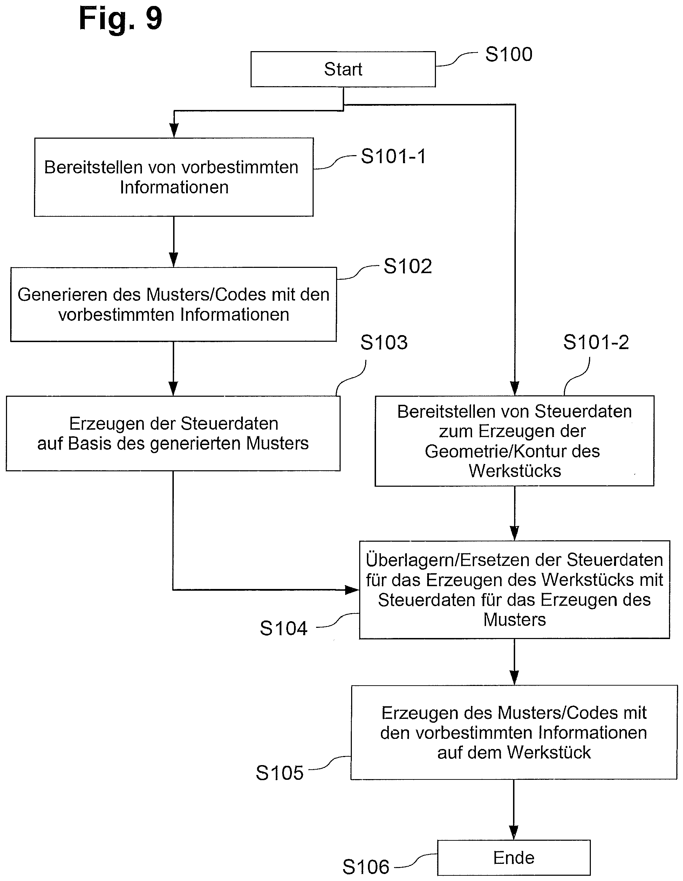

Fig. 9 zeigt schematisch ein Ablaufdiagramm eines Verfahrens zum spanenden Bearbeiten des Werkstücks WS an einer numerisch gesteuerten Werkzeugmaschine 1000 mit einem Werkzeug WZ.

Dabei wird vom Grundsatz her eine Relativbewegung des Werkzeugs WZ zu dem Werkstück WS auf Grundlage von Steuerdaten zum spanenden Bearbeiten des Werkstücks WS gesteuert.

Hierfür werden zunächst die Steuerdaten zum Erzeugen der Geometrie bzw. der Kontur des Werkstücks WS bereitgestellt (Steuerdaten des ersten Typs; z.B. im Schritt S101-2), auf Basis derer die Form das Werkstück WS in der Werkzeugmaschine 1000 durch spanende Bearbeitung des Werkstücks WS erzeugt wird. Beispielsweise können die Steuerdaten zum Erzeugen der Geometrie/Kontur des Werkstücks WS auf den Werkstückdaten 1655 des Datenspeichers 1652/1731 des Computers 1650 oder des Servers 1700 basieren.

Insbesondere geben die Steuerdaten des ersten Typs die zu steuernde Relativbewegung des Werkzeugs WZ zu dem Werkstück WS zumindest in einer ersten Bearbeitungsrichtung (hier die Vorschubrichtung VR) und eine Vorschubgeschwindigkeit bei der Relativbewegung des Werkzeugs WZ zu dem Werkstück WS zumindest in der ersten Bearbeitungsrichtung an.

Weiterhin können die Steuerdaten, insbesondere die Steuerdaten des zweiten Typs, die Daten zum Erzeugen des Musters 200 angeben, in dem die vorbestimmten Informationen codiert sind. Bevor jedoch die Steuerdaten des zweiten Typs zur Erzeugung des Musters 200 generiert werden können, müssen zunächst die vorbestimmten Informationen, welche später in dem Muster 200 codiert werden sollen, bereitgestellt werden (z.B. im Schritt S101-1).

Die Steuerdaten des zweiten Typs können dabei insbesondere Änderungen der Vorschubgeschwindigkeit bei der Relativbewegung des Werkzeugs WZ zu dem Werkstück WS zumindest in der ersten Bearbeitungsrichtung angeben, wobei die Änderungen der Vorschubgeschwindigkeit auf Grundlage des Musters 200, das die vorbestimmten Informationen codiert, vorgegeben sind.

Die vorbestimmten Informationen, wie sie beispielsweise vor dem Bearbeiten des Werkstücks bereitgestellt werden (z.B. im Schritt S101-1), können dabei z.B. Seriennummern, werkstückspezifische Codes oder Datenbanken-IDs umfassen, die für den weiteren Bearbeitungsprozess oder für die spätere Verwendung (z.B. für die Montage) des gefertigten Werkstücks WS wichtig sind.

Auf Basis der bereitgestellten vorbestimmten Informationen kann nun das Muster 200, das auf der Oberfläche 120 des Werkstücks WS aufgebracht werden soll, generiert werden (z.B. im Schritt 102). Dies kann beispielsweise virtuell in der Steuerungsvorrichtung 1600 geschehen.

Hierfür können verschiedenste Verfahren angewendet werden, um die vorbestimmten Informationen entsprechend in ein Muster 200 in der Art eines Strich- oder QR-Codes, oder eines anderen Code-Typs, zu codieren. Sogenannte Fehlerkorrekturverfahren können ebenfalls zum Codieren verwendet werden.

Im Anschluss daran erfolgt nun das Erzeugen der Steuerdaten des zweiten Typs auf Basis des generierten Musters 200 (z.B. im Schritt S103).

Dabei weisen die Steuerdaten des zweiten Typs vorzugsweise zumindest eine Änderung der Vorschubgeschwindigkeit des Werkzeugs WZ zu dem Werkstück WS auf, durch die das Muster 200 auf der Oberfläche 120 des Werkstücks erzeugt wird. Die Steuerdaten des zweiten Typs beeinflussen damit also die Aktoren 1010 der Werkzeugmaschine 1000 zumindest hinsichtlich der Vorschubgeschwindigkeit auf Basis des generierten Musters 200.

Im nun folgenden Schritt (z.B. im Schritt S104) werden die Steuerdaten des ersten Typs, auf Basis derer die Geometrie/Kontur des Werkstücks WS erzeugt wird, mit den Steuerdaten des zweiten Typs überlagert, so dass die Steuerdaten des ersten Typs zumindest in Bezug auf die Vorschubgeschwindigkeit auf Basis des zu erzeugenden Musters 200 durch die Steuerdaten des zweiten Typs beeinflusst werden.

Alternativ können aber auch die Steuerdaten des zweiten Typs die Steuerdaten des ersten Typs für die Bearbeitung des Werkstücks WS bei der Erzeugung des Musters 200 ersetzen. Dies kann beispielsweise davon abhängen, ob die Steuerdaten des zweiten Typs einen Differenzwert der Vorschubgeschwindigkeit angeben (dann käme eine Überlagerung mit den Steuerdaten des ersten Typs in Betracht) oder ob die Steuerdaten des zweiten Typs einen Absolutwert der Vorschubgeschwindigkeit, die sich von der von den Steuerdaten des ersten Typs angegebenen Vorschubgeschwindigkeit unterscheidet, angeben.

Auf Basis der geänderten Steuerdaten kann nun das Erzeugen des Musters/Codes mit den vorbestimmten Informationen auf dem Werkstück erfolgen (z.B. im Schritt S105).

Dabei soll an dieser Stelle auf die vorherigen Ausführungen zu dem Erzeugen des Musters 200 als Strichcode bzw. als QR-Code verwiesen werden, insbesondere auf die Ausführungen zu den Figuren 4, 5, 7 und 8.

Mit dem vorher beschriebenen Verfahren können somit die vorbestimmten Informationen auf der Oberfläche 120 des Werkstücks WS erzeugt werden, insbesondere in der Art, dass das die vorbestimmten Informationen codierende Muster 200 auf der Oberfläche 120 des Werkstücks WS optisch auslesbar erzeugt wird.

Dies ist insbesondere deshalb wichtig, damit entsprechende Auslesegeräte zum Auslesen der in dem Muster 200 codierten vorbestimmten Informationen verwendet werden können. Teilweise können hierfür einfache Kamerasysteme (wie sie z.B. in handelsüblichen Digitalkameras Verwendung finden) genutzt werden, wie dies z.B. nachfolgend beschrieben ist.

Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist.

Die folgende Offenbarung ist nicht Teil der vorliegenden Erfindung.

Fig. 10 zeigt schematisch die Aufnahme des auf der Oberfläche 120 des Werkstücks WS erzeugten Musters 200 mittels des Auslesegerätes 2000.

Dabei wird eine in dem Auslesegerät 2000 vorgesehene Optik 2100 auf das Muster 200 gerichtet und ein Abbild des Musters 200 in dem Auslesegerät 2000 erzeugt. Dieses Abbild kann sowohl in Farbe als auch in Grautönen (Graustufen) aufgenommen sein, um weiterverarbeitet zu werden.

Eine in dem Auslesegerät 2000 vorgesehene Rechnereinheit 2200 kann beispielsweise nun das Abbild des aufgenommenen Musters 200 derart weiterverarbeiten, dass das Abbild pixelweise ausgewertet wird (z.B. Pixel mit Linie (oder Linienabschnitt), Bit = 1; Pixel ohne Linie (oder ohne Linienabschnitt), Bit = 0) und dadurch das Muster 200 z.B. in eine digital verarbeitbare Bitdarstellung (100101110011...) umgerechnet wird. Auf Basis dieser Bitdarstellung des Musters 200 kann die Rechnereinheit 2200 des Auslesegerätes 2000 das Muster 200 wieder decodieren und somit die für die Bearbeitung des Werkstücks WS vorgegebenen Informationen darstellen oder zu einer weiteren Rechnereinheit 3000 oder zu einer Speichereinheit 4000 übermitteln, die mit dem in Fig. 2 und 3 beschriebenen Netzwerkes 1800 verbunden sein können.

Darstellung a) der Fig. 10 zeigt dabei das Werkstück WS mit dem Muster 200, das auf einer Werkzeugmaschine 1000 nach Fig. 1 erzeugt wurde, sowie das Auslesegerät 2000 mit der Optik 2100 zum Aufnehmen eines Abbildes des Musters 200, wobei das Auslesegerät 2000 ferner mit der Rechnereinheit 3000 und/oder der Speichereinheit 4000 in Verbindung steht, wobei die Verbindung drahtgebunden oder drahtlos ausgebildet sein kann.

Ein großer Vorteil bei der Verwendung eines Strichcodes als Informationsträger liegt auch darin, dass wenn ein Teil eines oder mehrerer Striche bzw. Lücken beschädigt ist (beispielsweise durch einen Kratzer oder Kerben etc.), so kann aber immer noch der unbeschädigte Teil der jeweiligen Striche und Lücken für das Auslesen genutzt werden.

Teilweise kann das sogar in der Art genutzt werden, dass der Strichcode rasterartig in eine Vielzahl an Subbildern unterteilt wird. Auf Basis dessen kann nun durch die Subbilder, die keine Beschädigungen aufweisen, die vollständige Information des Strichcodes wieder erfasst und ausgewertet werden.

Ferner können die Subbilder, die im Wesentlichen den gleichen Abschnitt des Strichcodes zeigen, miteinander verglichen werden, um daraus zusätzliche Informationen beispielsweise bezüglich Fehlerstellen des auf dem Werkstück WS aufgebrachten Strichcodes zu identifizieren.

Daraus folgt, dass ein Strichcode beispielsweise deutlich unempfindlicher ist gegenüber Beschädigungen als ein 2D-Code wie ein QR-Code, da der Strichcode seine Informationen nur in eine Richtung auf der Oberfläche 120 des Werkstücks WS codiert und nicht wie ein QR-Code in beide Richtungen auf der Oberfläche 120 des Werkstücks WS. Daher ist der Strichcode auch nur in einer Richtung sensitiv gegenüber Beschädigungen, wobei der QR-Code in beide Richtungen sensitiv gegenüber Beschädigungen ist.

Darstellung b) der Fig. 10 zeigt dabei das Werkstück WS mit dem Muster 200, das auf einer Werkzeugmaschine 1000 nach Fig. 6 erzeugt wurde, sowie das Auslesegerät 2000 mit der Optik 2100 zum Aufnehmen eines Abbildes des Musters 200, wobei das Auslesegerät 2000 ferner mit der Rechnereinheit 3000 und/oder der Speichereinheit 4000 in Verbindung steht, wobei die Verbindung drahtgebunden oder drahtlos ausgebildet sein kann.

An dieser Stelle soll darauf hingewiesen werden, dass das Auslesegerät 2000 für das Auslesen des Strichcodes unter anderem ein 3D-Laser-Scanner oder ein sogenannter Imager (ein Bild/Abbild aufnehmendes Gerät wie z.B. Digitalkamera oder ein CCD-/CMOS-Sensor mit vorgesetzter Optik) sein kann. Dabei sollen die genannten Beispiele des Auslesegerätes 2000 nicht als einschränkend aufgefasst werden und können weitere Ausführungsmöglichkeiten zum Auslesen des Strichcodes bzw. des QR-Codes, oder eines anderen Code-Typs, umfassen.

Ferner soll darauf hingewiesen werden, dass das Auslesegerät 2000 für das Auslesen des QR-Codes (als Beispiel eines zweidimensionalen Codes) sich im Wesentlichen auf Auslesegeräte beschränkt, die 2D-Codes erfassen können. Ein Beispiel hierfür ist der Imager, welcher ferner den Code (sei es der Strichcode oder der QR-Code bzw. weitere Codearten) in Farbe (wie bei handelsüblichen Digitalkameras) oder aber in Grautönen (Graustufen) erfassen kann. CCD- bzw. CMOS-Sensoren mit vorgesetzter Optik können hierfür Anwendung finden. Auch hier soll der Imager nicht als einschränkende Möglichkeit zum Auslesen des QR-Codes verstanden sein, sondern weiterhin sämtliche Möglichkeiten zum Auslesen eines zweidimensionalen Codes mit umfasst sein.

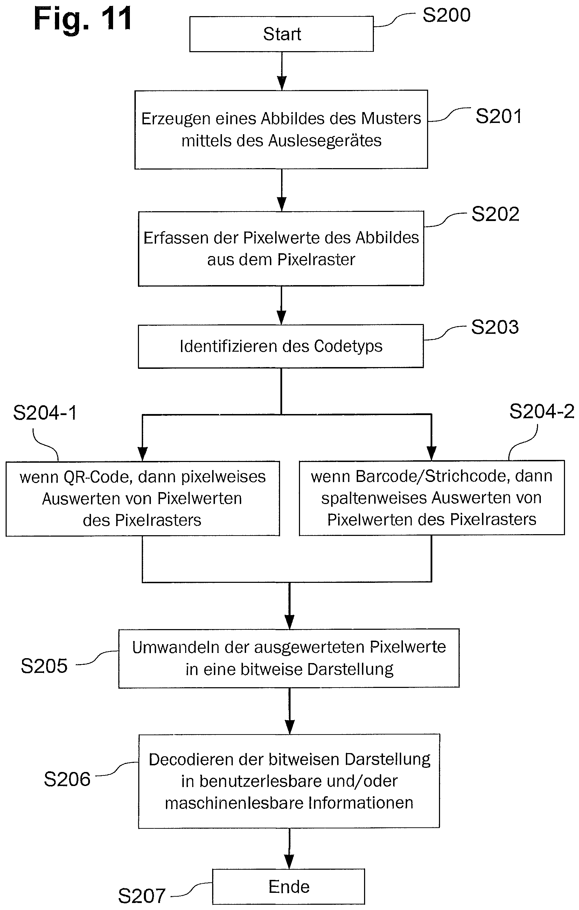

Fig. 11 zeigt schematisch ein Ablaufdiagramm zum Auslesen der auf dem Werkstück WS codierten Informationen durch ein Auslesegerät 2000.

Dabei muss zunächst der Code/das Muster 200, das die vorbestimmten Informationen in codierter Weise trägt, erfasst werden.

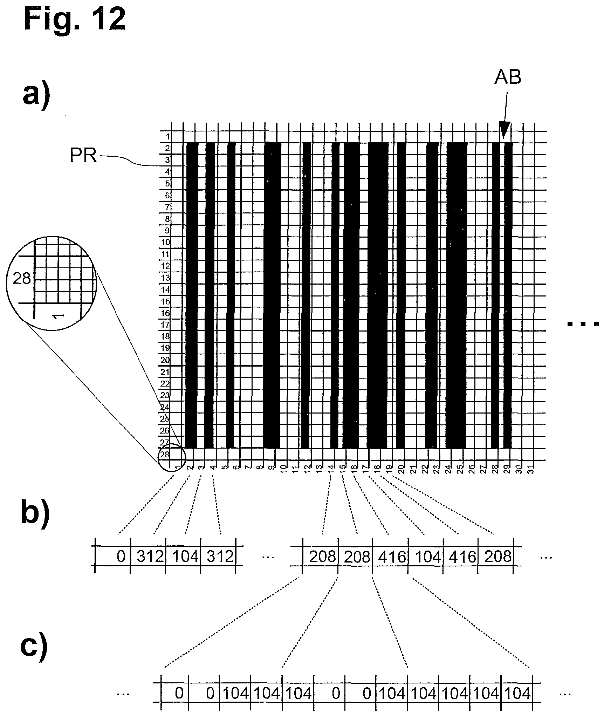

Hierfür können grundsätzlich wieder verschiedenste Typen von Auslesegeräten 2000 verwendet werden, um das Muster 200, welches die vorbestimmten Informationen auf dem Werkstück WS codiert, aufzunehmen und ein Abbild AB (siehe hierfür auch Fig. 12) zu erzeugen (z.B. im Schritt 201). Beispiele für Auslesegeräte 2000 wurden bereits in Bezug auf Figur 10 beschrieben.

Insbesondere eigenen sich jedoch sogenannte Imager, welche neben einem eindimensionalen Code wie dem Barcode/Strichcode auch zweidimensionale Codes wie dem QR-Code erfassen und auslesen können. Ihr Vorteil besteht darin, dass sie von dem Code/Muster 200 ein vollständiges (im Sinne von zweidimensionales) Abbild AB erzeugen und erst danach eine Auswertung des Abbildes AB erfolgt.

Dabei ist es unerheblich, ob das Abbild AB in Farbe oder aber in Grautönen (Graustufen) erzeugt wird. Im einfachsten Fall kann eine handelsübliche Digitalkamera zum Erzeugen des Abbildes AB des Musters 200 verwendet werden.

Im darauf folgenden Schritt werden die Pixelwerte aus dem Pixelraster PR des Abbildes AB erfasst (z.B. im Schritt S202). Dies dient der späteren Lokalisierung von Strichen, wenn beispielsweise ein Strichcode/Barcode vorliegt, bzw. von Codeabschnitten, wenn ein zweidimensionaler Code wie ein QR-Code vorliegt.

Hierfür können beispielsweise die Helligkeitswerte des Abbildes AB genutzt werden, um eventuelle Einflüsse von unterschiedlichen Farben auf und um dem Code auf dem Abbild AB von vornherein auszuschließen und das Auslesen des Musters 200 unabhängig von dem Material des Untergrundes oder der Farbe des Codes selbst zu machen, da beispielsweise die Farbe schwarz nicht überall gleich ist und teilweise unterschiedliche Nuancen von Rottönen/Blautönen etc. aufweisen kann.

In jedem Fall kann auf Basis der erfassten Pixelwerte aus dem Pixelraster PR sehr schnell bestimmt werden, um welche Art von Codierung (eindimensional/zweidimensional bzw. Strichcode/2D-Code) es sich handelt (z.B. im Schritt S203), da die Codes jeweils entsprechende identifizierende Merkmale aufweisen.

Wird nun also erkannt, dass ein QR-Code (oder ein anderer zweidimensionaler Code) vorliegt, dann werden die einzelnen Pixel von dem erzeugten Abbild AB des Musters 200 im Hinblick auf ihre Helligkeitswerte bzw. Pixelwerte ausgewertet (z.B. im Schritt S204-1), um im Detail die Abschnitte des zweidimensionalen Codes zu lokalisieren.

Wird jedoch ein Barcode/Strichcode erkannt, kann alternativ zur pixelweisen Auswertung des Abbildes AB eine spaltenweise Auswertung der Pixelwerte des Abbildes AB erfolgen (z.B. im Schritt S204-2).

Dabei werden die Pixelwerte einer Spalte des Pixelrasters PR beispielsweise zusammenaddiert und entsprechend ausgewertet. Die Spalte mit hohen Pixelwerten (wenn beispielsweise ein dunkles Pixel eine 1 und ein helles Pixel eine 0 bekommt) muss folgerichtig einen Strich des Strichcodes abgebildet haben (siehe hierfür Fig. 12).

Insbesondere kann dadurch vorteilhaft ein eindimensionaler Code (wie beispielsweise ein Strichcode), der in einer Ebene aufgenommen und ein entsprechendes zweidimensionales Abbild AB von ihm erzeugt wurde, wieder in eine eindimensionale Darstellung umgerechnet werden (siehe hierfür auch Fig. 12), um beispielsweise die Menge an Daten für die spätere Auswertung bzw. Decodierung möglichst gering zu halten.

Auf Basis der vereinfachten, eindimensionalen Darstellung können die Striche des Strichcodes sehr leicht lokalisiert werden.

Im nun darauf folgenden Schritt werden die ausgewerteten Pixelwerte umgewandelt, so dass sie eine bitweise Darstellung des Musters 200 wiedergeben (z.B. im Schritt S205).

Im Anschluss daran kann die bitweise Darstellung des Musters 200 in benutzerlesbare und/oder maschinenlesbare Informationen decodiert werden (z.B. im Schritt S206) und entsprechend für weitere Schritte verwendet werden.

Fig. 12 zeigt schematisch die Umwandlung/Umrechnung eines Strichcodes (bzw. Musters 200), der in einer Ebene durch ein Auslesegerät 2000 (hier Imager) aufgenommen wurde, in eine eindimensionale Darstellung.

Zunächst liegt dabei der Strichcode als Abbildung AB, welche den Strichcode in einer zweidimensionalen Darstellung wiedergibt, zur Auswertung vor. Ein Raster, beispielsweise das Pixelraster PR des Auslesegerätes 2000 (Imager), wird nun über das Abbild AB des Strichcodes gelegt und ausgewertet, welche Pixel einen Strich des Strichcodes abbilden.

Dabei soll zunächst darauf hingewiesen werden, dass jedes Segment des in Fig. 12 a) angewendeten Rasters (hier 31 × 28 Segmente) 16 Pixel (4 × 4 Pixel) umfasst, um die Auswertung grundlegend wiederzugeben. Teilweise werden heute jedoch Imagers (wie z.B. Digitalkameras) mit mehreren Millionen Pixel Auflösung verwendet, so dass in der Umsetzung des Ausleseverfahrens deutlich mehr Pixel zur Auswertung des Strichcodes zur Verfügung stehen.

Nun werden die Pixelwerte einer Spalte des angewendeten Rasters beispielsweise zusammenaddiert, wobei in dem gezeigten Beispiel ein dunkles Pixel eine 1 und ein helles Pixel eine 0 bekommt, was einer Farbtiefe von 1 Bit pro Pixel entspricht und nur schwarz-weiß-Darstellungen zulässt.

Dabei wurden zunächst in Fig. 12 b) die Pixel der Spalte des gröberen Rasters (31 × 28 Segmente) zusammenaddiert, um zu verdeutlichen, dass bei einer zu geringen Auflösung des Abbildes AB zwar eine Tendenz der Verteilung der Striche des Strichcodes (Musters 200) zu erkennen ist, jedoch bei zu grober Auflösung noch nicht genau die Lokalisierung der Striche sowie ihre jeweilige Strichbreite qualitativ dargestellt werden kann. Eine Auswertung auf Grundlage der eindimensionalen Darstellung des Strichcodes wie in Fig. 12 b) gezeigt ist somit noch nicht möglich.

Erst bei einer feineren Auflösung des Abbildes AB des Strichcodes (Musters 200) in der Ebene kann der Strichcode qualitativ ausreichend in eine eindimensionale Darstellung überführt werden, so dass sowohl die Lokalisierung der einzelnen Striche des Strichcodes als auch ihre jeweilige Breite wiedergegeben werden kann (siehe hierfür Fig. 12 c)).

Jedoch können bei höher gewählten Farbtiefen wie beispielsweise 1 Byte pro Pixel (8 Bit pro Pixel) auch diverseste Farben und vor allem Grautöne (Graustufen) erfasst werden. Dies wiederum kann durchaus dazu führen, dass eine niedrigere Auflösung gewählt werden kann und dennoch die Striche des Strichcodes (Musters 200) qualitativ ausreichend lokalisiert und ihre Breite bestimmt werden kann.

Auf Basis der Position und Breite der Striche des Strichcodes in der eindimensionalen Darstellung, wie in Fig. 12 c) gezeigt, kann nun eine Decodierung erfolgen und die in dem Strichcode codierten Informationen wiederum für eine Maschine oder einen Benutzer lesbar wiedergeben (siehe hierfür auch die Ausführungen zu Fig. 11).

### LISTE DER BEZUGSZEICHEN

- **AB**: Abbild des Musters/Codes
- **HS**: Hauptschneide des Werkzeugs (an einer Drehmaschine)
- **PR**: Pixelraster
- **SK**: Schneidkontur des Werkzeugs (an einer Fräsmaschine)
- **VR**: Vorschubrichtung
- **WS**: Werkstück
- **WZ**: Werkzeug
- **120**: Oberfläche des Werkstücks, auf der das Muster/der Code erzeugt wird
- **200**: Muster/ Code
- **210**: Drehrille
- **220**: Fräsrille
- **1000**: Werkzeugmaschine
- **1010**: Aktoren der Werkzeugmaschine
- **1020**: Sensoren der Werkzeugmaschine
- **1100**: Maschinenbett
- **1200**: Spindelständer (bei Drehmaschine)
- **1300**: Werkzeugschlitten
- **1310/1320**: Spindelständer (bei Fräsmaschine)
- **1400**: Hauptspindel
- **1500**: Maschinentisch
- **1600**: Steuerungsvorrichtung
- **1605**: Steuerpult
- **1610**: Bildschirm
- **1620**: Eingabevorrichtung
- **1630**: Maschinensteuerung
- **1631**: NC-Steuerung (numerische Steuerung)
- **1632**: PLC-Steuerung (programmierbare Logiksteuerung)
- **1640**: Human Machine Interface
- **1641**: GUI (grafische Benutzeroberfläche)
- **1642**: I/O (Eingabe-/Ausgabe-Abschnitt)
- **1650**: Computer
- **1651**: CPU des Computers
- **1652**: Datenspeicher des Computers
- **1653**: Anwendungsdaten
- **1654**: Bearbeitungszyklusdaten
- **1655**: Werkstückdaten
- **1656**: Schnittstelle des Computers
- **1700**: Server
- **1711**: CPU des Servers
- **1712**: Schnittstelle des Servers
- **1731**: Datenspeicher des Servers
- **1800**: Netzwerk
- **2000**: Auslesegerät
- **2100**: Optik des Auslesegerätes
- **2200**: Rechnereinheit des Auslesegerätes
- **3000**: Rechnereinheit
- **4000**: Speichereinheit

## Patentansprüche

1. Verfahren zum spanenden Bearbeiten eines Werkstücks (WS) an einer numerisch gesteuerten Werkzeugmaschine (1000) mit einem Werkzeug (WZ), mit:
Steuern einer Relativbewegung des Werkzeugs (WZ) zu dem Werkstück (WS) auf Grundlage von vorgegebenen Steuerdaten zum spanenden Bearbeiten des Werkstücks (WS),
wobei die Steuerdaten die zu steuernde Relativbewegung des Werkzeugs (WZ) zu dem Werkstück (WS) zumindest in einer ersten Bearbeitungsrichtung und eine Vorschubgeschwindigkeit bei der Relativbewegung des Werkzeugs (WZ) zu dem Werkstück (WS) zumindest in der ersten Bearbeitungsrichtung angeben,
wobei die Steuerdaten Änderungen der Vorschubgeschwindigkeit bei der Relativbewegung des Werkzeugs (WZ) zu dem Werkstück (WS) zumindest in der ersten Bearbeitungsrichtung angeben, **dadurch gekennzeichnet, dass**
die Änderungen der Vorschubgeschwindigkeit auf Grundlage eines Musters (200), das vorbestimmte Informationen codiert, vorgegeben sind, und
bei der Relativbewegung des Werkzeugs (WZ) zu dem Werkstück (WS) auf Grundlage der Steuerdaten das die vorbestimmten Informationen codierende Muster (200) auf der Oberfläche (120) des Werkstücks optisch auslesbar erzeugt wird.

2. Verfahren Anspruch 1, **dadurch gekennzeichnet, dass**
das die vorbestimmten Informationen codierende Muster (200) auf der Oberfläche (120) des Werkstücks durch eine opto-elektronische Einrichtung (2000) auslesbar ist.

3. Verfahren nach einem der vorherigen Ansprüche, **dadurch gekennzeichnet, dass**
das die vorbestimmten Informationen codierende Muster (200) auf der Oberfläche (120) des Werkstücks ein ein- oder zweidimensionaler binarer Code ist, insbesondere ein Barcode oder ein QR-Code, wobei die vorbestimmten Informationen, die durch das Muster (200) auf der Oberfläche (120) des Werkstücks codiert werden, insbesondere bevorzugt Seriennummern, werkstückspezifische Codes und/oder Datenbanken-IDs umfassen.

4. Verfahren nach einem der vorherigen Ansprüche, **dadurch gekennzeichnet, dass**
die Steuerdaten im Wesentlichen folgendes aufweisen:
einen ersten Steuerdatentyp, der die Relativbewegung des Werkzeugs (WZ) zu dem Werkstück (WS) zumindest in der ersten Bearbeitungsrichtung und die Vorschubgeschwindigkeit bei der Relativbewegung des Werkzeugs (WZ) zu dem Werkstück (WS) zumindest in der ersten Bearbeitungsrichtung angibt, so dass eine vorgegebene Geometrie des Werkstücks bei der spanenden Bearbeitung erzeugt wird, und
einen zweiten Steuerdatentyp, der die durch den ersten Typ von Steuerdaten angegebene Vorschubgeschwindigkeit der Relativbewegung des Werkzeugs (WZ) zu dem Werkstück (WS) zumindest in der ersten Bearbeitungsrichtung auf Grundlage des Musters (200), das die vorbestimmten Informationen codiert, ändert oder ersetzt, so dass bei der Relativbewegung des Werkzeugs (WZ) zu dem Werkstück (WS) das Muster (200) auf der Oberfläche (120) des Werkstücks optisch auslesbar erzeugt wird.

5. Verfahren nach Anspruch 4, **dadurch gekennzeichnet, dass**
der erste Steuerdatentyp ferner die Relativbewegung des Werkzeugs (WZ) zu dem Werkstück (WS) zumindest in einer zweiten Bearbeitungsrichtung und die Vorschubgeschwindigkeit bei der Relativbewegung des Werkzeugs (WZ) zu dem Werkstück (WS) zumindest in der zweiten Bearbeitungsrichtung angibt, so dass eine vorgegebene Geometrie des Werkstücks bei der spanenden Bearbeitung erzeugt wird, und
der zweite Steuerdatentyp ferner die durch den ersten Steuerdatentyp angegebene Vorschubgeschwindigkeit der Relativbewegung des Werkzeugs (WZ) zu dem Werkstück (WS) zumindest in der zweiten Bearbeitungsrichtung auf Grundlage des Musters (200), das die vorbestimmten Informationen codiert, ändert oder ersetzt, so dass bei der Relativbewegung des Werkzeugs (WZ) zu dem Werkstück (WS) das Muster (200) auf der Oberfläche (120) des Werkstücks optisch auslesbar erzeugt wird.

6. Verfahren nach Anspruch 4 oder 5, **dadurch gekennzeichnet, dass**
in einer Steuerungsvorrichtung (1600) der Werkzeugmaschine die Steuerdaten des ersten Steuerdatentyps von den Steuerdaten des zweiten Steuerdatentyps für die Erzeugung des Musters (200) auf der Oberfläche (120) des Werkstücks überlagert werden, um die Vorschubgeschwindigkeit bei der Relativbewegung des Werkzeugs (WZ) zu dem Werkstück (WS) zu andern und das Muster (200) auf der Oberfläche (120) des Werkstücks zu erzeugen; und/oder
in einer Steuerungsvorrichtung (1600) der Werkzeugmaschine die Steuerdaten des ersten Steuerdatentyps von den Steuerdaten des zweiten Steuerdatentyps für die Erzeugung des Musters (200) auf der Oberfläche (120) des Werkstücks ersetzt werden, um eine von der Vorschubgeschwindigkeit der Steuerdaten des ersten Steuerdatentyps differierende Vorschubgeschwindigkeit bei der Relativbewegung des Werkzeugs (WZ) zu dem Werkstück (WS) anzugeben und das Muster (200) auf der Oberfläche (120) des Werkstücks zu erzeugen.

7. Verfahren nach einem der vorherigen Ansprüche, **dadurch gekennzeichnet, dass**
mehrere Werkstücke (WS) mit dem Verfahren an der numerisch gesteuerten Werkzeugmaschine (1000) spanend bearbeiten werden, wobei jedem zu bearbeitenden Werkstück (WS) ein vorbestimmte Informationen codierendes Muster (200) zugewiesen wird, wobei sich das zugewiesene, vorbestimmte Informationen codierende Muster (200) des zu bearbeitenden Werkstücks (WS) von den Mustern (200) der bereits bearbeiteten Werkstücke unterscheidet.

8. Verfahren nach einem der vorherigen Ansprüche, **dadurch gekennzeichnet, dass**
die Steuerdaten zum Steuern der Relativbewegung des Werkzeugs (WZ) zu dem Werkstück (WS) über ein Netzwerk oder ein Speichermedium zu einer Steuerungsvorrichtung (1600) der Werkzeugmaschine übertragen werden, oder
die Steuerdaten zum Steuern der Relativbewegung des Werkzeugs (WZ) zu dem Werkstück (WS) manuell über eine Eingabevorrichtung (1620) der Steuerungsvorrichtung eingegeben werden.

9. Werkzeugmaschine (1000) zum spanenden Bearbeiten eines Werkstücks (WS), mit:
einem Spannmittel zum Aufspannen des Werkstücks (WS),
einer Werkzeugaufnahme zum Aufnehmen des Werkzeugs (WZ) zur Bearbeitung des Werkstücks (WS), und
einer Steuerungsvorrichtung (1600) zum Steuern einer Relativbewegung des Werkzeugs (WZ) zu dem Werkstück (WS) zumindest in einer ersten Bearbeitungsrichtung,
wobei die Steuerungsvorrichtung (1600) zum Steuern der Relativbewegung des Werkzeugs (WZ) zu dem Werkstück (WS) auf Grundlage von vorgegebenen Steuerdaten zum spanenden Bearbeiten des Werkstücks (WS) eingerichtet ist,
wobei die Steuerdaten die zu steuernde Relativbewegung des Werkzeugs (WZ) zu dem Werkstück (WS) zumindest in der ersten Bearbeitungsrichtung und eine Vorschubgeschwindigkeit bei der Relativbewegung des Werkzeugs (WZ) zu dem Werkstück (WS) zumindest in der ersten Bearbeitungsrichtung angeben,
wobei die Steuerdaten Änderungen der Vorschubgeschwindigkeit bei der Relativbewegung des Werkzeugs (WZ) zu dem Werkstück (WS) zumindest in der ersten Bearbeitungsrichtung angeben, **dadurch gekennzeichnet, dass**
die Änderungen der Vorschubgeschwindigkeit auf Grundlage eines Musters (200), das vorbestimmte Informationen codiert, vorgegeben sind, wobei die Steuerungsvorrichtung (1600) eingerichtet ist, auf Basis der Steuerdaten die Relativbewegung des Werkzeugs (WZ) zu dem Werkstück (WS) zumindest in der ersten Bearbeitungsrichtung mit den vorgegebenen Änderungen der Vorschubgeschwindigkeit zu steuern, sodass
bei der Relativbewegung des Werkzeugs (WZ) zu dem Werkstück (WS) auf Grundlage der Steuerdaten das die vorbestimmten Informationen codierende Muster (200) auf der Oberfläche (120) des Werkstücks optisch auslesbar erzeugt wird.

10. Werkzeugmaschine (1000) nach Anspruch 9, **dadurch gekennzeichnet, dass**
das Spannmittel zum Aufspannen des Werkstücks (WS) in einer Arbeitsspindel (1400) der Werkzeugmaschine angeordnet ist und die Werkzeugaufnahme zum Aufnehmen des Werkzeugs (WZ) an einem Werkzeugschlitten (1300) der Werkzeugmaschine angeordnet ist; oder
das Spannmittel zum Aufspannen des Werkstücks (WS) auf einem Maschinentisch (1500) der Werkzeugmaschine angeordnet ist und die Werkzeugaufnahme zum Aufnehmen des Werkzeugs (WZ) in einer Arbeitsspindel (1400) der Werkzeugmaschine angeordnet ist.

## Claims

1. A method for machining a workpiece (WS) on a numerically controlled machine tool (1000) with a tool (WZ), comprising:
controlling a relative motion of the tool (WZ) with respect to the workpiece (WS) based on predetermined control data for machining the workpiece (WS), wherein
the control data indicates the relative motion to be controlled of the tool (WZ) with respect to the workpiece (WS) at least in a first machining direction, and an advancing speed in the relative motion of the tool (WZ) with respect to the workpiece (WS) at least in the first machining direction, and
the control data indicates changes in the advancing speed in the relative motion of the tool (WZ) with respect to the workpiece (WS) at least in the first machining direction, **characterized in that**
the changes in the advancing speed are predetermined based on a pattern (200) coding predetermined information, and
the pattern (200) coding the predetermined information is generated optically readable on the surface (120) of the workpiece in the relative motion of the tool (WZ) with respect to the workpiece (WS) based on the control data.

2. The method of claim 1, **characterized in that**
the pattern (200) coding the predetermined information on the surface (120) of the workpiece is readable by an opto-electronic device (2000).

3. The method of one of the previous claims, **characterized in that**
the pattern (200) coding the predetermined information on the surface (120) of the workpiece is a one- or two-dimensional binary code, in particular a bar code or a QR code, wherein the predetermined information coded on the surface (120) of the workpiece by the pattern (200) comprises, particularly preferable, serial numbers, workpiece-specific codes, and/or data base IDs.

4. The method of one of the previous claims, **characterized in that** the control data primarily comprises:
a first control data type indicating the relative motion of the tool (WZ) with respect to the workpiece (WS) at least in the first machining direction, and the advancing speed in the relative motion of the tool (WZ) with respect to the workpiece (WS) at least in the first machining direction, so that a predetermined geometry of the workpiece is generated in the machining, and
a second control data type changing or replacing the advancing speed of the relative motion of the tool (WZ) with respect to the workpiece (WS) indicated by the first type of control data, at least in the first machining direction based on the pattern (200) coding the predetermined information, so that the pattern (200) is generated optically readable on the surface (120) of the workpiece in the relative motion of the tool (WZ) with respect to the workpiece (WS).

5. The method of claim 4, **characterized in that**
the first control data type further indicates the relative motion of the tool (WZ) with respect to the workpiece (WS) at least in a second machining direction, and the advancing speed in the relative motion of the tool (WZ) with respect to the workpiece (WS) at least in the second machining direction, so that a predetermined geometry of the workpiece is generated in the machining, and
the second control data type further changes or replaces the advancing speed of the relative motion of the tool (WZ) with respect to the workpiece (WS) indicated by the first control data type, at least in the second machining direction based on the pattern (200) coding the predetermined information, so that the pattern (200) is generated optically readable on the surface (120) of the workpiece in the relative motion of the tool (WZ) with respect to the workpiece (WS).

6. The method of claim 4 or 5, **characterized in that**
the control data of the first control data types is superimposed in a control apparatus (1600) of the machine tool with the control data of the second control data types for the generation of the pattern (200) on the surface (120) of the workpiece to change the advancing speed in the relative motion of the tool (WZ) with respect to the workpiece (WS) and generate the pattern (200) on the surface (120) of the workpiece; and/or
the control data of the first control data types is replaced in a control apparatus (1600) of the machine tool by the control data of the second control data types for the generation of the pattern (200) on the surface (120) of the workpiece to indicate an advancing speed in the relative motion of the tool (WZ) with respect to the workpiece (WS) differing from the advancing speed of the control data of the first control data types and to generate the pattern (200) on the surface (120) of the workpiece.

7. The method of one of the previous claims, **characterized in that**
multiple workpieces (WS) are machined with the method on the numerically controlled machine tool (1000), each workpiece (WS) to be machined being allocated a pattern (200) coding predetermined information, wherein the allocated pattern (200) coding predetermined information of the workpiece (WS) to be machined differs from the patterns (200) of the workpieces already machined.

8. The method of one of the previous claims, **characterized in that**
the control data for controlling the relative motion of the tool (WZ) with respect to the workpiece (WS) is transmitted to a control apparatus (1600) of the machine tool through a network or storage medium, or
the control data for controlling the relative motion of the tool (WZ) with respect to the workpiece (WS) is input manually through an input device (1620) of the control apparatus.

9. A machine tool (1000) for machining a workpiece (WS), comprising:
a clamping means for clamping the workpiece (WS),
a tool holder for receiving the tool (WZ) for machining the workpiece (WS), and
a control apparatus (1600) for controlling a relative motion of the tool (WZ) with respect to the workpiece (WS) at least in a first machining direction,
the control apparatus (1600) configured to control the relative motion of the tool (WZ) with respect to the workpiece (WS) based on predetermined control data for machining the workpiece (WS), wherein
the control data indicates the relative motion to be controlled of the tool (WZ) with respect to the workpiece (WS) at least in a first machining direction, and an advancing speed in the relative motion of the tool (WZ) with respect to the workpiece (WS) at least in the first machining direction, and
the control data indicates changes in the advancing speed in the relative motion of the tool (WZ) with respect to the workpiece (WS) at least in the first machining direction, **characterized in that**
the changes in the advancing speed are predetermined based on a pattern (200) coding predetermined information, wherein the control apparatus (1600) is configured to control the relative motion of the tool (WZ) with respect to the workpiece (WS) based on the control data at least in the first machining direction with the predetermined changes in the advancing speed, so that
the pattern (200) coding the predetermined information is generated optically readable on the surface (120) of the workpiece in the relative motion of the tool (WZ) with respect to the workpiece (WS) based on the control data.

10. The machine tool (1000) of claim 9, **characterized in that**
the clamping means for clamping the workpiece (WS) is arranged in a work spindle (1400) of the machine tool and the tool holder for receiving the tool (WZ) is arranged on a tool slide (1300) of the machine tool; or
the clamping means for clamping the workpiece (WS) is arranged on a machine bench (1500) of the machine tool and the tool holder for receiving the tool (WZ) is arranged in a work spindle (1400) of the machine tool.

## Revendications

1. Procédé pour l'usinage par enlèvement de copeaux d'une pièce (WS) sur une machine-outil (1000) à commande numérique avec un outil (WZ), avec :
la commande d'un mouvement relatif de l'outil (WZ) par rapport à la pièce (WS) sur la base de données de commande prédéfinies pour l'usinage par enlèvement de copeaux de la pièce (WS),
dans lequel les données de commande indiquent le mouvement relatif à commander de l'outil (WZ) par rapport à la pièce (WS) au moins dans une première direction d'usinage et une vitesse d'avance pour le mouvement relatif de l'outil (WZ) par rapport à la pièce (WS) au moins dans la première direction d'usinage,
dans lequel
les données de commande indiquent des modifications de la vitesse d'avance lors du mouvement relatif de l'outil (WZ) par rapport à la pièce (WS) au moins dans la première direction d'usinage,
**caractérisé en ce que**
les modifications de la vitesse d'avance sont prédéfinies sur la base d'un motif (200), qui code des informations prédéfinies, et
lors du mouvement relatif de l'outil (WZ) par rapport à la pièce (WS) le motif (200) codant les informations prédéfinies est produit sur la surface (120) de la pièce de manière à pouvoir être lu optiquement sur la base des données de commande.

2. Procédé selon la revendication 1, **caractérisé en ce que**
le motif (200) codant les informations prédéfinies sur la surface (120) de la pièce peut être lu par un dispositif opto-électronique (2000).

3. Procédé selon l'une quelconque des revendications précédentes, **caractérisé en ce que**
le motif (200) codant les informations prédéfinies sur la surface (120) de la pièce est un code binaire unidimensionnel ou bidimensionnel, en particulier un code à barres ou un code QR, dans lequel les informations prédéfinies, qui sont codées par le motif (200) sur la surface (120) de la pièce, comprennent de manière particulièrement préférée des numéros de série, des codes spécifiques à la pièce et/ou des identifiants de base de données.

4. Procédé selon l'une quelconque des revendications précédentes, **caractérisé en ce que**
les données de commande présentent sensiblement ce qui suit :
un premier type de données de commande, qui indique le mouvement relatif de l'outil (WZ) par rapport à la pièce (WS) au moins dans la première direction d'usinage et la vitesse d'avance lors du mouvement relatif de l'outil (WZ) par rapport à la pièce (WS) au moins dans la première direction d'usinage, de sorte qu'une géométrie prédéfinie de la pièce est produite lors de l'usinage par enlèvement de copeaux, et
un deuxième type de données de commande, qui modifie ou remplace la vitesse d'avance du mouvement relatif de l'outil (WZ) par rapport à la pièce (WS) indiquée par le premier type de données de commande au moins dans la première direction d'usinage sur la base du motif (200), qui code les informations prédéfinies, de sorte que lors du mouvement relatif de l'outil (WZ) par rapport à la pièce (WS), le motif (200) est produit sur la surface (120) de la pièce de manière à pouvoir être lu optiquement.

5. Procédé selon la revendication 4, **caractérisé en ce que**
le premier type de données de commande indique en outre le mouvement relatif de l'outil (WZ) par rapport à la pièce (WS) au moins dans une deuxième direction d'usinage et la vitesse d'avance lors du mouvement relatif de l'outil (WZ) par rapport à la pièce (WS) au moins dans la deuxième direction d'usinage, de sorte qu'une géométrie prédéfinie de la pièce lors de l'usinage par enlèvement de copeaux est produite, et
le deuxième type de données de commande modifie ou remplace en outre la vitesse d'avance du mouvement relatif de l'outil (WZ) par rapport à la pièce (WS) indiquée par le premier type de données de commande au moins dans la deuxième direction d'usinage sur la base du motif (200), qui code les informations prédéfinies, de sorte que lors du mouvement relatif de l'outil (WZ) par rapport à la pièce (WS) le motif (200) est produit sur la surface (120) de la pièce de manière à pouvoir être lu optiquement.

6. Procédé selon la revendication 4 ou 5, **caractérisé en ce que** dans un dispositif de commande (1600) de la machine-outil les données de commande du premier type de données de commande sont recouvertes par les données de commande du deuxième type de données de commande pour la production du motif (200) sur la surface (120) de la pièce, afin de modifier la vitesse d'avance lors du mouvement relatif de l'outil (WZ) par rapport à la pièce (WS) et de produire le motif (200) sur la surface (120) de la pièce ; et/ou
dans un dispositif de commande (1600) de la machine-outil les données de commande du premier type de données de commande sont remplacées par les données de commande du deuxième type de données de commande pour la production du motif (200) sur la surface (120) de la pièce, afin d'indiquer une vitesse d'avance différant de la vitesse d'avance des données de commande du premier type de données de commande lors du mouvement relatif de l'outil (WZ) par rapport à la pièce (WS) et de produire le motif (200) sur la surface (120) de la pièce.

7. Procédé selon l'une quelconque des revendications précédentes, **caractérisé en ce que**
plusieurs pièces (WS) sont usinées par enlèvement de copeaux sur la machine-outil (1000) à commande numérique avec le procédé, dans lequel un motif (200) codant des informations prédéfinies est attribué à chaque pièce (WS) à usiner, dans lequel le motif (200) codant des informations prédéfinies attribué de la pièce (WS) à usiner se différencie des motifs (200) des pièces déjà usinées.

8. Procédé selon l'une quelconque des revendications précédentes, **caractérisé en ce que**
les données de commande pour la commande du mouvement relatif de l'outil (WZ) par rapport à la pièce (WS) sont transmises par l'intermédiaire d'un réseau ou d'un support d'enregistrement à un dispositif de commande (1600) de la machine-outil, ou
les données de commande pour la commande du mouvement relatif de l'outil (WZ) par rapport à la pièce (WS) sont entrées manuellement par l'intermédiaire d'un dispositif d'entrée (1620) du dispositif de commande.

9. Machine-outil (1000) pour l'usinage par enlèvement de copeaux d'une pièce (WS), avec :
un moyen de serrage pour le serrage de la pièce (WS),
un logement d'outil pour le logement de l'outil (WZ) pour l'usinage de la pièce (WS), et
un dispositif de commande (1600) pour la commande d'un mouvement relatif de l'outil (WZ) par rapport à la pièce (WS) au moins dans une première direction d'usinage,
dans laquelle le dispositif de commande (1600) est conçu pour commander le mouvement relatif de l'outil (WZ) par rapport à la pièce (WS) sur la base de données de commande prédéfinies pour l'usinage par enlèvement de copeaux de la pièce (WS),
dans laquelle les données de commande indiquent le mouvement relatif à commander de l'outil (WZ) par rapport à la pièce (WS) au moins dans la première direction d'usinage et une vitesse d'avance lors du mouvement relatif de l'outil (WZ) par rapport à la pièce (WS) au moins dans la première direction d'usinage,
dans laquelle
les données de commande indiquent des modifications de la vitesse d'avance lors du mouvement relatif de l'outil (WZ) par rapport à la pièce (WS) au moins dans la première direction d'usinage,
**caractérisé en ce que**
les modifications de la vitesse d'avance sont prédéfinies sur la base d'un motif (200), qui code des informations prédéfinies, dans laquelle le dispositif de commande (1600) est conçu pour commander le mouvement relatif de l'outil (WZ) par rapport à la pièce (WS) au moins dans la première direction d'usinage avec les modifications prédéfinies de la vitesse d'avance sur la base des données de commande, de sorte que
lors du mouvement relatif de l'outil (WZ) par rapport à la pièce (WS), le motif (200) codant les informations prédéfinies est produit sur la surface (120) de la pièce de manière à pouvoir être lu optiquement sur la base des données de commande.

10. Machine-outil (1000) selon la revendication 9, **caractérisée en ce que**
le moyen de serrage pour le serrage de la pièce (WS) est disposé dans une broche de travail (1400) de la machine-outil et le logement d'outil pour le logement de l'outil (WZ) est disposé sur un chariot porte-outil (1300) de la machine-outil ; ou
le moyen de serrage pour le serrage de la pièce (WS) est disposé sur une table de machine (1500) de la machine-outil et le logement d'outil pour le logement de l'outil (WZ) est disposé dans une broche de travail (1400) de la machine-outil.
